# EUROPÄISCHE PATENTSCHRIFT

(11) **EP 3 938 597 B1**
(45) Veröffentlichungstag und Bekanntmachung des Hinweises auf die Patenterteilung: **26.04.2023**
(21) Anmeldenummer: 20719127.1
(22) Anmeldetag: 02.04.2020
(51) Int. Cl.: B33Y 10/00, B33Y 70/00, B66C 13/48, B66C 23/00, E04G 21/04, B66C 23/30, B66C 17/06, B33Y 30/00

(54) **BAU- UND/ODER MATERIALUMSCHLAGSMASCHINE SOWIE VERFAHREN ZUM FÜHREN UND BEWEGEN EINES ARBEITSKOPFS**
BUILDING AND/OR MATERIAL HANDLING MACHINE AND METHOD FOR GUIDING AND MOVING A WORKING HEAD
MACHINE DE CONSTRUCTION ET/OU DE MANUTENTION DE MATÉRIAU AINSI QUE PROCÉDÉ POUR GUIDER ET DÉPLACER UNE TÊTE DE TRAVAIL

(30) Priorität: 05.04.2019 DE 102019109019
(43) Veröffentlichungstag der Anmeldung: 19.01.2022
(73) Patentinhaber: Liebherr-Werk Biberach GmbH, 88400 Biberach an der Riss (DE)
(72) Erfinder: BRAMBERGER, Robert, 82293 Mittelstetten/Vogach (DE); KÖGL, Martin, 88400 Biberach an der Riß (DE)
(74) Vertreter: Thoma, Michael
(86) Internationale Anmeldenummer: PCT/EP2020/059351
(87) Internationale Veröffentlichungsnummer: WO 2020/201400

(56) Entgegenhaltungen:
- CN-B- 106 401 194
- DE-A1- 3 223 169
- FR-A1- 2 967 526
- KR-A- 20190 014 287

## Beschreibung

Die vorliegende Erfindung betrifft eine Bau- und/oder Materialumschlagsmaschine zum Erstellen eines Bauwerks und/oder Manipulieren eines Werkstücks, mit einem Arbeitskopf, der verfahrbar an einer Tragrahmenstruktur gelagert ist. Die Erfindung betrifft ferner ein Verfahren zum Führen und Bewegen eines Arbeitskopfs, insbesondere in Form eines 3D-Druckkopfs.

Eine solche Baumaschine zum Erstellen eines Bauwerks zeigt beispielsweise die Schrift CN 106401194 B, die eine Portalroboter-ähnliche Tragstruktur umfasst, die insgesamt auf Schienen verfahrbar ist und einen Arbeitskopf trägt, der entlang eines Querträgers verfahrbar ist, welcher selbst wiederum auf der Portalstruktur längsverfahrbar ist. Ähnliche Bau- bzw. Materialumschlagsmaschinen sind auch aus den Schriften KR 2019 0014287 A, DE 32 23 169 A1 und FR 2967526 A1 bekannt.

In jüngerer Zeit wird versucht, auch größere Baustrukturen wie Brücken, ganze Häuser oder andere Gebäude mittels additiver Fertigungsverfahren aufzubauen. Dabei wird ein Arbeitskopf zum Ausbringen eines Baumaterials beispielsweise entlang einer zu errichtenden Gebäudewand mehrfach hin- und her verfahren, um Schicht für Schicht aufzutragen. Solche Gerätschaften werden oft unter der Bezeichnung 3D-Drucker zusammengefasst, dessen Arbeitskopf ein Materialausbringungskopf wie beispielsweise ein Betonspritzkopf sein kann. Je nach Material, aus welchem die Baustruktur aufgebaut wird, können dies aber auch andere Arbeitsköpfe sein, beispielsweise Schaumspritzköpfe oder Mehrkomponentenspritzköpfe, beispielsweise wenn thermisch zu isolierende Gebäudewände im Sandwichverfahren aus einem Schaumkern und darauf aufzubringendem Mauerputz zu fertigen sind.

3D-Drucker werden bislang hauptsächlich in einem an sich kleineren Maßstab eingesetzt, insbesondere in der industriellen Fertigung, die innerhalb von Werkshallen erfolgt. Um den 3D-Druckkopf präzise im dreidimensionalen Raum bewegen zu können und beispielsweise eine reliefartige Kontur erzeugen zu können, werden gerne Portalroboter eingesetzt, die bei einem recht großen Arbeitsbereich eine recht hohe Genauigkeit erreichen können. Einen solchen Portalroboter zeigt beispielsweise die Schrift US 8,029,710 B2. In kleineren Anwendungen werden oft auch Knickarmroboter eingesetzt, um den 3D-Druckkopf zu führen.

Um solche Knickarmroboter baustellentauglich zu machen, wurde auch schon vorgeschlagen, sie auf ein Raupenfahrwerk zu verpflanzen, vgl. US 2018/0345533 A1. Aufgrund der begrenzten Tragweite können mit solchen Knickarmrobotern, auch wenn sie mittels eines Raupenfahrwerks auf einer Baustelle verfahren werden können, kaum größere Gewerke wie beispielsweise ein mehrstöckiges Haus errichtet werden, zumindest nicht mit der gewünschten Präzision. Wird der auslegerartige Knickarm entsprechend verlängert, kommt es zu Verwindungen und damit Positionierungenauigkeiten, da der Knickarm nicht beliebig massiv dimensioniert werden kann, um ein Umfallen des Raupenfahrwerks zu verhindern.

Um einen Arbeitskopf über einen ausreichend großen Verfahrbereich führen und beispielsweise auch für mehrstöckige Häuser einsetzen zu können, schlägt die Schrift CN 109129819 A vor, eine portalkranartige Trägerstruktur für den Arbeitskopf an der Gebäudefassade des zu errichtenden Gebäudes selbst zu befestigen. Dabei werden Trägersäulen an der Außenfassade befestigt, die als Hubstützen fungieren. Mittels Spindelantrieben können an den fassadenseitig befestigten Trägersäulen Portalsäulen vertikal verfahren werden, welche über dem Gebäude zwei Längsschienen tragen, auf denen ein den Arbeitskopf tragender Querträger verfahren werden kann. Durch Versetzen der genannten Trägersäulen an der Außenfassade kann die Trägerstruktur mit dem Gebäude mitwachsen, wobei allerdings ein solches Versetzen sehr aufwändig ist und einen langwierigen Umrüstprozess erfordert.

Die genannten Ansätze sind in der Praxis jedoch allesamt mit Nachteilen behaftet und können die divergierenden Anforderungen, nämlich eine sehr große Reichweite und trotzdem hohe Positioniergenauigkeit sowie rasches und einfaches Einrichten trotz oft unwegsamem Baustellengelände nicht gleichermaßen zufriedenstellend erfüllen. Dies gilt umso mehr, wenn es gilt, die Bau- bzw. Materialumschlagsmaschine an unterschiedliche Gebäudegrößen zu adaptieren und rasch von einem zu errichtenden Gebäude zu einem anderen Gebäude zu verbringen. Da additive Fertigungsverfahren oft nur für die Fertigung von bestimmten Abschnitten eines Gebäudes eingesetzt werden, ergeben sich für einen entsprechenden 3D-Drucker oft nur kurze, schnell zu erledigenden Jobs, die es erfordern, dass die Maschine rasch von einer Baustelle zur nächsten transportiert werden kann.

Der vorliegenden Erfindung liegt die Aufgabe zugrunde, eine verbesserte Bau- und/oder Materialumschlagsmaschine der genannten Art sowie ein verbessertes Verfahren zum Führen und Bewegen eines Arbeitskopfs zu schaffen, die Nachteile des Stands der Technik vermeiden und letztere in vorteilhafter Weise weiterbilden. Insbesondere soll eine Vorrichtung und ein Verfahren zum positionsgenauen Verfahren eines Arbeitskopfs über einen weiten Arbeitsbereich geschaffen werden, die einfach an verschiedene Bauwerksgrößen adaptiert und schnell von Baustelle zu Baustelle verbracht werden können.

Erfindungsgemäß wird die genannte Aufgabe durch Verfahren gemäß Anspruch 1 und 2 sowie eine Bau- und/oder Materialumschlagsmaschine nach Anspruch 3 gelöst. Bevorzugte Ausgestaltungen der Erfindung sind Gegenstand der abhängigen Ansprüche.

Es wird also vorgeschlagen, den Arbeitskopf mittels mehrerer Turmdrehkrane zu verfahren und zu positionieren, was angesichts der Zielsetzung hoher Positioniergenauigkeit an sich zunächst wenig zielführend erscheint. Um diesen Mangel zu adressieren, werden die mehreren Turmdrehkrane jedoch in spezieller Weise eingesetzt. Erfindungsgemäß werden zumindest drei Turmdrehkrane mit ihren Auslegern aneinander befestigt. An den sich hierdurch gegenseitig stabilisierenden Turmdrehkranen kann nach einem ersten Aspekt ein den Arbeitskopf tragender Führungsträger an zumindest zwei Laufkatzen befestigt werden, so dass der Arbeitskopf durch Fahren der Laufkatzen entlang zweier Ausleger in seiner Arbeitsposition verstellt werden kann.

Da die Turmdrehkrane mit ihren Auslegern aneinander befestigt werden, bilden die liegenden Ausleger eine portalähnliche Trägerstruktur, die die Turmdrehkrane gegenseitig stabilisieren kann. Durch die verfahrbare Anlenkung eines Querträgers an zumindest zwei Auslegern wird nochmals eine weitere Stabilisierung erzielt, die eine ausreichend hohe Positioniergenauigkeit ermöglicht.

Insbesondere können die Turmdrehkrane dabei derart aufgestellt werden, dass die Ausleger sich reihum von Turm zu Turm erstrecken und/oder gemeinsam einen geschlossenen Polygonzug bilden. Insbesondere können die Ausleger ein der Anzahl der Krane entsprechendes Vieleck definieren, also bei drei Turmdrehkranen ein Dreieck, bei vier Turmdrehkranen ein Viereck usw.

In Weiterbildung der Erfindung können insbesondere vier Turmdrehkrane mit ihren Auslegern aneinander befestigt sein, so dass die Ausleger ein Rechteck, insbesondere ein Quadrat definieren können. Vorteilhafterweise werden die Turmdrehkrane so angeordnet, dass sich zumindest zwei Ausleger zweier Turmdrehkrane zueinander parallel erstrecken. An den zwei sich parallel erstreckenden Auslegern kann ein Querträger in einfacher Weise verfahrbar gelagert werden, insbesondere unmittelbar an den Laufkatzen der Ausleger starr befestigt werden, so dass der Querträger präzise entlang einer Doppelschienenführung verfahren werden kann, welche von den beiden parallelen Auslegern gebildet wird.

Grundsätzlich wäre es aber auch möglich, beispielsweise bei Verwendung eines teleskopierbaren Querträgers, zwei nicht exakt parallel ausgerichtete Ausleger bzw. leicht V-förmig aufgespreizte Ausleger als Schienenführung für den Querträger zu verwenden.

Wie bei Turmdrehkranen an sich üblich, können die Ausleger jeweils um eine aufrechte Drehwerksachse relativ zum Turm oder zusammen mit dem Turm, der den Ausleger trägt, verdrehbar sein, wobei die Verdrehung des Turms und/oder des Auslegers relativ zum Turm durch einen entsprechenden Drehwerksantrieb erfolgen kann, beispielsweise einen Elektromotor, der ein Ritzel antreibt, welches in einen Zahnkranz eingreift. Durch die genannte Verdrehbarkeit der Ausleger können die genannten Ausleger beim Aufstellen der Trägerstruktur für den Arbeitskopf in einfacher Weise relativ zueinander passend positioniert werden.

In Weiterbildung der Erfindung werden die Ausleger jeweils mit ihren vorderen Endabschnitten an einem jeweils nächsten Turmdrehkran befestigt, wobei die Befestigung der Auslegerspitze bzw. des vorderen Endabschnitts am Turm des jeweils nächsten Krans und/oder an dessen Ausleger vorzugsweise in der Nähe des Turms erfolgen kann.

Um eine schnelle Verbindung und ein schnelles Lösen der Befestigungen der Turmdrehkrane voneinander zu ermöglichen, können in vorteilhafter Weiterbildung der Erfindung zwischen den Turmdrehkranen Schnellwechsler bzw. -kupplungen vorgesehen sein, die eine formschlüssige und/oder kraftschlüssige Verriegelung eines jeweils vorderen Endabschnitts des jeweiligen Auslegers am jeweils nächsten Kran, insbesondere dessen Turm und/oder dessen Ausleger ermöglicht.

Insbesondere können solche mechanischen Schnellwechsler bzw. -kupplungen verfahrbare Riegelelemente und zueinander passende Formschlusskonturen an Endabschnitten der Ausleger und damit zusammenwirkenden Verbindungsabschnitten am nächsten Kran aufweisen. Beispielsweise können am Turm und/oder einem dazu benachbarten Abschnitt des Auslegers und/oder Gegenauslegers eines jeweiligen Turmdrehkrans ein Verriegelungskopf vorgesehen sein, an den ein anderer Kran mit dem Endabschnitt seines Auslegers angedockt werden kann, insbesondere formpassend angeschlossen werden kann. Beispielsweise kann ein Kupplungsschuh am Turm und/oder Ausleger und/oder Gegenausleger eines Krans angebracht sein, in welchen Kupplungsschuh die Spitze des Auslegers des anderen Krans passend eingefahren werden kann.

Bewegliche Riegelelemente wie beispielsweise ausfahrbare Sperrbolzen oder keilförmig wirkende Klemmriegel können ein formschlüssiges und/oder kraftschlüssiges Sichern und/oder Fangen des Auslegerendabschnitts am Gegenstück des anderen Krans sicherstellen.

Die genannten Riegelelemente können beispielsweise hakenförmige Schwenkriegel sein und/oder translatorisch verschiebbare Sperrbolzen umfassen.

Vorteilhafterweise können die genannten Schnellkupplungen jeweils zwischen einem starr verriegelnden, keine Relativbewegungen zulassenden Verriegelungszustand einerseits und einem dämpfenden und/oder nachgebenden Haltezustand andererseits umgeschaltet werden. Beispielsweise kann die jeweilige Schnellkupplung zwei aneinander fahrbare Kupplungshälften umfassen, von denen zumindest eine beispielsweise über Federelemente oder andere nachgiebige und/oder bewegliche Elemente am zugehörigen Anschlussteil befestigt ist, nämlich an dem auskragenden Endabschnitt des Auslegers und/oder dem Gegenstück des benachbarten Krans, insbesondere dessen Turm. In dem genannten dämpfenden und/oder nachgiebigen Kuppplungsmodus ist zwar der jeweilige Ausleger immer noch am Turm bzw. dem benachbarten Strukturabschnitt des nächsten Krans angelenkt, kann sich jedoch begrenzt bewegen. In diesem beweglichen Modus kann die gesamte Tragrahmenstruktur, das heißt die Turmdrehkrane zusammen verfahren werden, wobei gewisse Ausgleichsbewegungen ermöglicht werden, beispielsweise wenn die Tragrahmenstruktur umfassend die Turmdrehkrane von einem Gebäudeabschnitt zu einem benachbarten Gebäudeabschnitt verfahren wird.

Um die Nachgiebigkeit der jeweiligen Schnellkupplung zu sperren, um im Arbeitsmodus des Arbeitskopfs höchste Positioniergenauigkeit zu erzielen, können die nachgiebigen Elemente, beispielsweise die genannten Federn blockiert werden, beispielsweise durch Ausfahren eines Riegels.

Die genannten Schnellkupplungen können im starr verriegelten Verriegelungszustand insbesondere statisch tragend ausgebildet sein, um eine Durchbiegung der miteinander verbundenen Ausleger zu minimieren. Besitzen die miteinander zu verbindenden Ausleger in an sich bekannter Weise sich in Längsrichtung erstreckende Ober- und Untergurte, kann die genannte Schnellkupplung sowohl den/die Ober- als auch den/die Untergurte zweier zu verbindender Ausleger aneinander verriegeln. Der Obergurt des einen Auslegers kann mit dem Obergurt des anderen Auslegers verriegelt werden, und die Untergurte des einen Auslegers können mit den Untergurten des anderen Auslegers verriegelt werden, sodass eine insgesamt stabile, statisch tragende Verbindung zwischen den Auslegern vorgesehen ist.

Alternativ oder zusätzlich können die genannten Schnellkupplungen auch zusätzliche Versteifungselemente umfassen, die nach Art einer Versteifungshülse einen Abschnitt des einen Auslegers mit einem Abschnitt des anderen Auslegers verbindet und versteift, insbesondere darübergeschoben werden kann. Beispielsweise können solche Versteifungselemente nach Art einer Schiene oder einer Hülse oder einer Bandage beispielsweise den Obergurt des einen Auslegers mit dem Obergurt des anderen Auslegers verbinden und versteifen. Analog kann ein Versteifungselement für einen oder jeden der Untergurte vorgesehen sein.

Um den Arbeitskopf nicht nur längs der Turmdrehkranausleger verfahren zu können, ist in Weiterbildung der Erfindung an dem genannten längs verfahrbaren Querträger ein verfahrbarer Schlitten gelagert, der den Arbeitskopf trägt. Der genannte Querschlitten kann durch einen Querantrieb längs des Querträgers verfahren werden, um den Arbeitskopf in Querrichtung in verschiedene, gewünschte Arbeitspositionen fahren zu können.

Die Höhen- bzw. Tiefenverstellung des Arbeitskopfs kann auf verschiedene Art und Weise erfolgen. Insbesondere um feine Höhenbewegungen des Arbeitskopfes ausführen bzw. einstellen zu können, kann ein Arbeitskopfträger höhenverstellbar relativ zu dem genannten Querträger, insbesondere zu dem Querschlitten verfahrbar gelagert sein. Der genannte Kopfträger kann beispielsweise mittels eines sich aufrecht erstreckenden, teleskopierbaren Trägers an dem genannten Querschlitten angelenkt sein. Alternativ oder zusätzlich kann der sich aufrecht erstreckende Kopfträger auch in aufrechter Richtung an dem genannten Querschlitten verfahren werden, beispielsweise durch einen Zahnstangenantrieb oder einen anderen geeigneten Verstellantrieb.

Alternativ oder zusätzlich können Höhenbewegungen des Arbeitskopfes aber auch durch eine Höhenverstellung seitens des Turmdrehkrans erzeugt werden, insbesondere durch einen höhenverstellbar ausgebildeten Turm, an dem der Ausleger des Krans befestigt ist. Insbesondere kann ein teleskopierbar ausgebildeter Turm vorgesehen sein, wobei vorteilhafterweise jeder der mehreren Turmdrehkrane einen solchen höhenverstellbaren, insbesondere teleskopierbaren Turm aufweisen kann, um die aneinander befestigten Ausleger bzw. die davon gebildete, liegende Trägerstruktur durch synchrones Verstellen der Turmhöhe nach oben bzw. nach unten fahren zu können.

Alternativ oder zusätzlich zu einer solchen Teleskopierbarkeit der Krantürme können die Krantürme auch durch Einklettern oder anderes Anbringen zusätzlicher Turmstücke verlängert bzw. durch Ausklettern oder Entfernen entsprechender Turmstücke verkürzt werden. Vorteilhafterweise kann der jeweilige Turmdrehkran hierzu eine Einklettervorrichtung besitzen, die ein einfaches und rasches Einklettern von Turmstücken ermöglicht. Hierzu kann ein Kletterführungsstück vorgesehen sein, welches ein Turmstück relativ zu einem anderen Turmstück oder einer Turmbasis halten kann und gleichzeitig erlaubt, dass ein Turmstück in Längsrichtung relativ zu dem Kletterstück verschoben wird, was beispielsweise durch einen Hydraulikzylinder erfolgen kann. Das genannte Kletterstück überbrückt sozusagen während des Verschiebens des gehaltenen Turmstücks den sich ergebenden Spalt bzw. Freiraum zum nächsten Turmstück bzw. zur Turmbasis, sodass von einer Seite her ein neues Turmstück eingeschoben und sodann an das vom Kletterstück gehaltene Turmstück angeschlossen werden kann. Solche Klettervorrichtungen für Turmdrehkrane sind per se bekannt, sodass diesbezüglich beispielsweise auf die Schrift WO 2015/135645 A1 verwiesen werden darf.

Hat der jeweilige Turmdrehkran seine maximale Höhe beispielsweise durch Austeleskopieren oder durch Einsetzen entsprechender Turmstücke erreicht, kann der Turm des Krans von dessen Drehbühne und/oder dessen Unterwagen demontiert und mittels Gebäudeanker an der bereits errichteten Gebäudefassade verankert werden, um auf diesem Weg weiter mit dem Gebäude mitwachsen zu können. Beispielsweise kann zunächst ein Turmteil unterhalb der Klettereinrichtung mit einem oder mehreren Gebäudeankern an der Fassade verankert werden, sodass ein weiteres Turmstück eingeklettert werden kann. Durch Versetzen bzw. Anbringen zusätzlicher Gebäudeanker an einem weiter oben liegenden Gebäudeabschnitt bzw. Turmabschnitt kann der Turm Stück für Stück weiter wachsen, während er an einem Gebäudeteil befestigt ist. Analog kann bei einem teleskopierbaren Turm vorgegangen werden, der abwechselnd an seinem Anlenkschuss und seinem austeleskopierbaren Schuss verankert werden kann.

Durch geschicktes Umsetzen der Gebäudeanker kann die Anordnung der Turmdrehkrane, die die Tragstruktur für den Arbeitskopf bilden, nicht nur vertikal mit dem Gebäude mitwachsen, sondern auch in horizontaler Richtung, wenn ein verschachteltes Gebäude mit horizontal zueinander versetzten Gebäudeteilen zu errichten ist.

Alternativ oder zusätzlich kann ein horizontales Erweitern oder Versetzen der Tragstruktur auch durch Befestigen eines zusätzlichen Turmkrans am bereits errichtetten Gebäude erfolgen, beispielsweise auf einem errichteten Gebäudeabsatz, wobei der Turm des neuen Krans ebenfalls mittels Gebäudeankern an dem jeweiligen Gebäudeabschnitt befestigt werden kann. Der Ausleger des neuen Krans kann mit dem Ausleger oder Turm eines der anderen bereits montierten Krane verbunden werden, um die Tragstruktur horizontal zu erweitern.

Dabei kann ein Montagehilfskran hilfreich sein, der in Form eines zusätzlichen Auslegers an einem der Krane, der Teil der Tragstruktur ist, ausgebildet sein kann. Ein solcher in die Tragstruktur integrierter Hilfskran oder ein separater Hilfskran kann auch bei der Versorgung der in die Höhe gewachsenen Baustelle mit Baumaterial und/oder Werkzeug und/oder anderen Materialien eingesetzt werden.

Um mit der Verfahrbarkeit des Arbeitskopfes entlang des zuvor genannten Querträgers nicht auf die Polygonfläche beschränkt zu sein, die von den miteinander verbundenen Auslegern aufgespannt wird, kann in vorteilhafter Weiterbildung der Erfindung der genannte Querträger über zumindest einen der genannten Ausleger hinaus auskragen und für den genannten Querschlitten, der den Arbeitskopf trägt, eine Verfahrbahn bilden, die sich sowohl innerhalb als auch außerhalb des von den Auslegern aufgespannten Polygons erstreckt. Hierdurch kann der Arbeitskopf sozusagen auf die Außenseite der Tragrahmenstruktur verfahren werden, um außerhalb des von den Kranauslegern aufgespannten Drei-, Vier- oder Mehrecks Arbeiten verrichten zu können und auch Gebäudeteile außerhalb des genannten, aufgespannten Polygons errichten zu können.

Vorteilhafterweise kann der genannte Ausleger an seinen beiden Enden über den jeweiligen Kranausleger hinaus auskragend ausgebildet sein, um zu gegenüberliegenden Seiten hin auch außerhalb des von den Auslegern aufgespannten Polygons arbeiten zu können.

Der auskragende Teil des Querträgers kann von einem starren Anschnitt des Querträgers gebildet sein. Alternativ kann der auskragende Teil auch ein austeleskopierbarer Teil des Querträgers sein.

Um auch quer zur Längsrichtung des Querträgers über das von den Auslegern aufgespannte Polygon hinaus arbeiten zu können, kann der genannte Querschlitten, der entlang des Querträgers verfahrbar ist, wiederum eine Traverse bzw. einen Träger tragen, der sich im Wesentlichen senkrecht bzw. quer zu dem erstgenannten Querträger erstrecken kann, wobei der Arbeitskopf an der genannten Traverse durch einen Schlitten oder eine ähnliche Aufhängung verfahrbar gelagert sein kann. Wenn der Querträger entlang der Kranausleger, an denen er aufgehängt ist, sehr nahe an die die Ausleger tragenden Türme verfahren ist, kann die genannte Traverse über die Verbindungslinie zwischen den beiden Türmen hinausragen, sodass der Arbeitskopf auch in dieser Richtung über das von den Kranauslegern aufgespannte Polygon hinaus verfahrbar ist.

Um über die genannte Traverse keine Kippmomente oder keine zu großen Kippmomente in den Querträger einzuleiten, kann die Traverse zwei gegenläufig verfahrbare Arbeitsköpfe bzw. einen Arbeitskopf und ein dazu gegenläufig verfahrbares Ballastgewicht tragen, um die Traverse bezüglich ihres Anlenkpunkts am Querträger auszubalancieren.

Alternativ oder zusätzlich zu einer solchen Traverse, die an dem genannten Querträger aufgehängt ist, wäre es auch möglich, zwei oder mehr Arbeitsköpfe an zwei separaten, nicht miteinander verbundenen Querträgern aufzuhängen, wobei vorteilhafterweise sich die beiden Querträger senkrecht zueinander bzw. quer zueinander erstrecken können. Um nicht miteinander zu kollidieren, können die genannten Querträger in diesem Falle in unterschiedlichen Höhen angeordnet sein.

Sind beispielsweise vier Turmdrehkrane mit ihren Auslegern so verbunden, dass sie ein Rechteck aufspannen, können die beiden Querträger jeweils an zwei gegenüberliegenden Auslegern bzw. den dort vorgesehenen Laufkatzen aufgehängt sein, sodass sich die Querträger - von oben her betrachtet - überkreuzen bzw. ein Kreuz aufspannen. Dabei kann einer der Querträger höher aufgehängt sein als der andere Querträger, sodass die Querträger übereinander wegfahrbar sind. Dies kann beispielsweise dadurch erreicht werden, dass zwischen dem Querträger und der jeweiligen Laufkatze ein Höhendistanzstück eingebaut wird. Alternativ oder zusätzlich wäre es auch möglich, die Ausleger paarweise in unterschiedlichen Höhen anzuordnen.

Um die von den Turmdrehkranen gebildete Tragrahmenstruktur für den Arbeitskopf schnell von einem Bauplatz zum nächsten Bauplatz verbringen zu können oder auch innerhalb ein und derselben Baustelle rasch verfahren zu können, kann zumindest einer der mehreren Turmdrehkrane als Mobilkran ausgebildet sein, dessen Turm auf einer Drehbühne angeordnet ist, die um eine aufrechte Achse drehbar auf einem Unterwagen gelagert sein kann, der ein Fahrwerk aufweist und vorteilhafterweise einen eigenen Fahrantrieb besitzt, um selbstfahrend zu sein. Ein solcher Fahrantrieb kann beispielsweise einen Verbrennungsmotor wie Dieselmotor oder einen Elektromotor umfassen.

Vorteilhafterweise kann auf dem genannten Oberwagen bzw. der Drehbühne, an der der Turm angelenkt ist, ein Ballastgewicht zum Abfangen von Kippmomenten vorgesehen sein, welches mit der Drehbühne mitrotieren und den Kran unabhängig von dessen Drehstellung austarieren kann.

Alternativ oder zusätzlich zu einem solchen Ballast an der Drehbühne kann der Turmdrehkran aber auch einen Gegenausleger aufweisen, der sich am Turm in die entgegengesetzte Richtung vom Ausleger erstreckt und ein Ballastgewicht tragen kann.

Vorteilhafterweise kann der Turm an der genannten Drehbühne um eine liegende Achse kippbar bzw. wippbar angelenkt sein, um aus der aufrechten Arbeitsstellung in eine liegende Transportstellung verbracht werden zu können. Hierzu kann ein Wippantrieb beispielsweise mit Hydraulikzylindern zwischen Drehbühne und Turm vorgesehen sein, um den Turm um die liegende Schwenkachse aufstellen und niederlegen zu können.

Ein solcher Mobilkran kann dabei unterschiedlich ausgebildete Unterwagen besitzen. Beispielsweise kann ein mehrachsiges Räderfahrwerk vorgesehen sein, wobei eine der Radachsen oder auch mehrere Radachsen vom Fahrantrieb angetrieben werden können. Vorteilhafterweise ist dabei zumindest eine Achse einlenkbar. Alternativ oder zusätzlich zu Radachsen kann das Fahrwerk aber auch ein Raupenfahrwerk aufweisen, sodass der Mobilkran durch Antreiben der Fahrwerksketten verfahren werden kann. Ein solches Kettenfahrwerk ist insbesondere bei unwegsamem Baustellengelände von Vorteil, um den Turmdrehkran auch bei tiefen, matschigen Böden oder größeren Unebenheiten oder abschüssigem Gelände sicher verfahren zu können.

Die von den Auslegern der Turmdrehkrane aufgespannte polygonzugartige Tragrahmenstruktur für den Arbeitskopf kann nicht nur zum Lagern und Verfahren des genannten Arbeitskopfes dienen, sondern auch für eine Bedachung des vom Arbeitskopf zu bearbeitenden Raumes genutzt werden. Insbesondere können die Ausleger ein aufspannbares Dach tragen, welches den Innenraum des Polygonprofils, welches von den Auslegern aufgespannt wird, überspannen kann, wobei ein solches Dach den genannten Innenraum vollständig oder teilweise überdachen kann. Ein solches aufspannbares Dach kann beispielsweise eine flächige Textil- und/oder Folienstruktur und/oder Hybriddachstrukturen umfassend flächige Folien- und/oder Textilmaterialien und tragende Spanten aufweisen.

Vorteilhafterweise kann ein solches aufspannbares Dach ein- und ausfahrbar ausgebildet sein, um bei stärkeren Windbelastungen die große Fläche des Dachs reduzieren zu können. Beispielsweise kann nach Art einer Sonnenmarkise oder eines Rollos ein ein- und ausrollbares Dach vorgesehen sein, wobei eine Wickelwalze an einem der Ausleger oder zwischen zwei Ausleger vorgesehen sein kann, um das Dachmaterial einrollen und auswickeln zu können.

Alternativ oder zusätzlich kann auch ein Faltdach vorgesehen sein, welches voneinander beabstandete Anlenkpunkte an zwei gegenüberliegenden Auslegers aufweisen kann, die dort jeweils mit Schlittenstücken verschiebbar gelagert sein können, sodass das Dach nach Art einer Leporellofaltung zu einer Seite hin zusammengefaltet werden kann.

Vorteilhafterweise kann ein solches Dach an Oberseiten der Ausleger angelenkt sein, beispielsweise an den Obergurten der Ausleger abgestützt und/oder verschieblich gelagert sein.

Um den Arbeitsbereich des Arbeitskopfs auch vor seitlichen Einflüssen wie Wind, Regen und dergleichen zu schützen, kann alternativ oder zusätzlich zu einem Dach an den Turmdrehkranen, die die Tragrahmenstruktur für den Arbeitskopf bilden, auch zumindest eine Seitenwand befestigt sein, die zumindest einen Teil der Aufrißfläche zwischen zumindest zwei Türmen abdeckt. Insbesondere können die Ausleger und/oder benachbarte Türme jeweils eine aufspannbare Seitenwand tragen, welche den Innenraum zwischen zwei Türmen und dem die Türme verbindenden Ausleger zumindest teilweise überspannen und sich im wesentlichen aufrecht erstrecken kann.

Eine solche aufspannbare Seitenwand kann beispielsweise eine flächige Textil- und/oder Folienstruktur und/oder Hybriddachstrukturen umfassend flächige Folien- und/oder Textilmaterialien und tragende Spanten aufweisen.

Vorteilhafterweise kann eine solche Schutzwand ein- und ausfahrbar ausgebildet sein, um bei stärkeren Windbelastungen die Windangriffsfläche reduzieren zu können. Beispielsweise kann nach Art einer Sonnenmarkise oder eines Rollos eine ein- und ausrollbare Schutzwand vorgesehen sein, wobei eine Wickelwalze liegend an einem der Ausleger oder stehend an einem der Türme vorgesehen sein kann, um das Seitenwandmaterial einrollen und auswickeln zu können.

Alternativ oder zusätzlich kann auch eine Faltwand nach Art eines Vorhangs oder eines Raffstores vorgesehen sein, welche voneinander beabstandete Anlenkpunkte an einem Ausleger oder an zwei benachbarten Türmen aufweisen kann, die dort jeweils mit Schlittenstücken verschiebbar gelagert sein können, sodass die Seitenwand nach Art einer Leporellofaltung nach oben zum Ausleger hin oder zu einer Seite zum dortigen Turm hin zusammengefaltet werden kann.

Um keine unnötig große Tragrahmenstruktur aufzuspannen, können in vorteilhafter Weiterbildung der Erfindung auch die Ausleger der Turmdrehkrane teleskopierbar und/oder längenverstellbar ausgebildet sein, beispielsweise durch Ergänzen oder Entfernen von Auslegerteilen. Insbesondere durch eine teleskopierbare Auslegerausbildung können insbesondere auch Toleranzen bzw. Fehler in der Beabstandung zwischen benachbarten Türmen ausgeglichen werden.

Wird ein in der Grundfläche größeres Haus gebaut, können die Ausleger ausgefahren werden, während für den Bau eines von der Grundfläche her kleineren Hauses die Ausleger eingefahren und die Türme zusammengerückt werden können. Vorteilhafterweise können durch längenveränderbare Ausleger auch einfach Anpassungen an unterschiedliche Grundrissformen erzielt werden. Wird beispielsweise ein quadratisches Haus errichtet, können alle Ausleger auf dieselbe Länge eingestellt werden, während zwei Ausleger länger und zwei Ausleger kürzer eingestellt werden können, wenn ein längliches, schmales Haus gebaut wird.

Nach einem weiteren Aspekt der vorliegenden Erfindung können die aneinander befestigten Turmdrehkrane auch dazu genutzt werden, den Arbeitskopf mittels Seilen zu verstellen und/oder einen Seilroboter zu tragen. Insbesondere kann eine Verseilung umfassend zumindest drei Steuerseile an den zumindest drei Turmdrehkranen, die mit ihren Auslegern aneinander befestigt sind, angebracht werden, insbesondere an den Türmen und/oder an den Auslegern. Dabei können Seilwinden zum Verstellen der genannten Verseilung relativ zu den aneinander befestigten Turmdrehkranen und/oder relativ zum Arbeitskopf vorgesehen und von einer elektronischen Steuervorrichtung zum Verfahren des Arbeitskopfs ansteuerbar sein.

Durch Ablassen bzw. Einholen der Seile mittels Seilwinden kann die Verseilung relativ zu der von den aneinander befestigten Turmdrehkranen definierten Tragstruktur verstellt und damit der Arbeitskopf verfahren werden. Gegebenenfalls kann die Verseilung auch relativ zu dem Arbeitskopf verstellt werden, beispielsweise durch eine am Arbeitskopf vorgesehene Seilwinde wie beispielsweise eine Spillwinde. Durch aufeinander abgestimmtes Ablassen und Einholen der Seile, beispielsweise zueinander synchron oder zueinander gegenläufig, kann der Arbeitskopf wahlweise in vertikaler Richtung und/oder in horizontaler Richtung verfahren werden.

Die Verseilung umfasst dabei vorteilhafterweise ein hochfestes Faserseil, das aus hochfesten Kunstfasern wie beispielsweise Aramidfasern (HMPA), Aramid- /Kohlefasergemischen, hochmodularen Polyethylenfasern (HMPE), oder Poly(p-phenylene-2,6-benzobisoxazole)-Fasern (PBO) bestehen können oder zumindest derartige Fasern aufweisen können. Durch die Verwendung solcher hochfester Faserseile sinkt nicht nur das Gewicht der Verseilung selbst sondern lassen sich auch die Konstruktionsgewichte davon belasteter Bauteile und die bewegten Massen reduzieren, was einerseits zu einer Traglaststeigerung der Anwendung führt und andererseits vor allen Dingen auch eine leichtere Einhaltung der für den Straßentransport zulässigen Achslasten auch bei einer geringeren Achszahl ermöglicht. Gleichzeitig kann durch die geringe Dehnung solcher Faserteile die Positioniergenauigkeit des Arbeitskopfs verbessert werden. Hinzu kommt, dass das Faserseil weniger störanfällig für windinduzierte Querschwingungen ist, sodass der Arbeitskopf im freien mit nicht immer perfekten Wetterbedingungen präziser positioniert werden kann.

Für seine Funktion als Tragstrukturteil, kann an dem Turm des Turmdrehkrans ein Anlenkpunkt für ein Steuerseil des Seilroboters vorgesehen sein, beispielsweise durch eine Umlenkrolle in einem oberen Abschnitt des Turms und/oder durch eine Seilwinde, die in einem oberen Abschnitt des Turms montiert sein kann. Vorteilhafterweise können auch mehrere Anlenkpunkte für mehrere Steuerseile an dem Turm des Turmdrehkrans angebracht sein, beispielsweise in Form von zueinander höhenversetzten Umlenkrollen, über die die Steuerseile zu Seilwinden am Fußbereich des Turms umgelenkt werden. Der Turm des Krans kann also eine Tragsäule für die Verseilung bilden. Alternativ oder zusätzlich kann auch am Ausleger des Krans ein Anlenkpunkt für die Verseilung angebracht sein.

Unabhängig davon, ob der Arbeitskopf durch die zuvor beschriebene Querträgerstruktur mit einem verfahrbar an dem Auslegern gelagerten Querträger verfahren wird, oder über die genannte Verseilung, kann in Weiterbildung der Erfindung vorteilhafterweise eine übergeordnete Steuerung vorgesehen sein, die die entsprechenden Antriebe der Turmdrehkrane und/oder der Seilwinden der Verseilung miteinander koordiniert und/oder aufeinander abstimmt.

Die Steuervorrichtung, die den Arbeitskopf in der gewünschten Weise verfährt und hierfür die Seilwinden betätigt, mittels derer die Seile der Verseilung verstellt werden, kann grundsätzlich verschieden strukturiert sein, wobei die genannte Steuervorrichtung vorteilhafterweise elektronisch ausgebildet ist und insbesondere einen Mikroprozessor aufweisen kann, der ein Steuerungsprogramm abarbeiten kann, welches in einer Speichereinrichtung abgespeichert sein kann. Die Steuervorrichtung kann dabei automatisch oder halbautomatisch einen vorbestimmten Verfahrweg des Arbeitskopfes abfahren, beispielsweise eine gerade, horizontale Strecke oder eine ansteigende oder abfallende Kurvenbewegung ausführen, die beispielsweise anhand eines BIM-Modells vorgegeben werden kann. Alternativ oder zusätzlich kann die Steuervorrichtung aber auch auf Eingabebefehle eines Maschinenführers reagieren und diese in eine entsprechende Stellbewegung des Arbeitskopfs umsetzen, indem die Steuervorrichtung die Eingabebefehle, beispielsweise das Verkippen oder Verschieben eines Joysticks in eine bestimmte Richtung in entsprechende Drehbewegungen der Seilwinden umsetzt.

Die genannte Steuervorrichtung kann dabei modular aufgebaut sein, insbesondere an jeder der mobilen Einheiten, die eine Tragsäule mit zumindest einer Seilwinde umfasst oder als Kran ausgebildet ist, eine lokale Steuervorrichtung aufweisen, die die zumindest eine Seilwinde ansteuert und/oder die Traglast bzw. das auf die jeweilige Einheit wirkende Kippmoment überwacht und gegebenenfalls die Anlage stillsetzt, falls eine die Standsicherheit gefährdende Bewegung bzw. Belastung droht.

Um die Seilbewegungen an den verschiedenen Tragsäulen bzw. dem zumindest einen Kran aufeinander abzustimmen und miteinander zu koordinieren, kann die Steuervorrichtung ferner eine übergeordnete Steuereinheit umfassen, die in der zuvor genannten Weise elektronisch ausgebildet sein und Mikroprozessor, Programmspeicher und weitere Bauteile aufweisen kann, wobei die genannte übergeordnete Steuereinheit mit den lokalen Steuereinrichtungen kommunizieren kann, um über die genannten lokalen Steuereinheiten die jeweiligen Seilwinden aufeinander abgestimmt anzusteuern und zu betätigen, um in der gewünschten Weise aufeinander abgestimmte Seilbewegungen zu erzielen.

Die genannte übergeordnete Steuereinheit kann hierbei von einer der lokalen Steuereinrichtungen gebildet sein, welche sozusagen eine Mastereinheit bildet, die die anderen, lokalen Steuereinrichtungen überwacht und/oder ansteuert. Alternativ zu einer solchen modularen Steuerungsarchitektur kann jedoch auch eine zentrale Steuervorrichtung Verwendung finden, die die Seilwinden an den einzelnen Einheiten direkt ansteuert.

Die Erfindung wird nachfolgend anhand bevorzugter Ausführungsbeispiele und zugehöriger Zeichnungen näher erläutert. In den Zeichnungen zeigen:
- Fig. 1:: eine perspektivische Darstellung einer Bau- und/oder Materialumschlagsmaschine mit einem Arbeitskopf in Form eines Betonspritzkopfs, der verfahrbar an einer Tragrahmenstruktur gelagert ist, die von vier Turmdrehkranen mit aneinander befestigten Auslegern gebildet wird,
- Fig. 2:: eine perspektivische Darstellung der Bau- bzw. Materialumschlagsmaschine aus Fig. 1 zusammen mit der in einer Cloud implementierten Steuerungs- und Konfigurationseinrichtung zum Steuern und/oder Konfigurieren der vier Turmdrehkrane, und
- Fig. 3:: eine perspektivische Darstellung einer von vier Turmdrehkranen gebildeten Tragrahmenstruktur für einen Arbeitskopf ähnlich den Figuren 1 und 2, wobei die Turmdrehkrane jeweils mit einer Einklettervorrichtung zum Einklettern von Turmstücken versehen sind, um die Höhe der Tragrahmenstruktur in größerem Maßstab an verschiedene Gebäude und deren Bauhöhen anpassen zu können,
- Fig. 4:: eine Draufsicht auf eine von vier Turmdrehkranen gebildete Tragrahmenstruktur ähnlich den vorhergehenden Figuren, wobei die Turmdrehkrane jeweils mit einem Doppelauslegersystem mit austeleskopierbaren Auslegerstücken versehen sind,
- Fig. 5:: eine Seitenansicht eines der Turmdrehkrane aus Fig. 5 zur Verdeutlichung des Doppelauslegersystems und der Wippbarkeit des Auslegers,
- Fig. 6:: eine Draufsicht auf die von den vier Turmdrehkranen gebildete Tragrahmenstruktur aus Fig. 4, wobei die Teilansichten a, b und c die Anpassung der Tragrahmenstruktur durch Ein- und Ausfahren der Ausleger verdeutlicht,
- Fig. 7:: eine perspektivische Darstellung einer von vier aneinander befestigten Turmdrehkranen gebildeten Tragrahmenstruktur ähnlich Fig. 1, wobei der Arbeitskopf relativ zu der genannten Tragrahmenstruktur durch eine Verseilung verstellbar ist, die an den Türmen der Turmdrehkrane angebrachte Steuerseile umfasst,
- Fig. 8:: eine Draufsicht auf eine Tragrahmenstruktur, die von drei Turmdrehkranen mit aneinander befestigten Auslegern gebildet ist, wobei der Arbeitskopf wiederum ähnlich der Ausbildung nach Fig. 7 über eine Verseilung an den Türmen der Turmdrehkrane angelenkt und durch Verstellen der Steuerseile verstellbar ist, und
- Fig. 9:: eine perspektivische Darstellung auf die von den vier Turmdrehkranen gebildete Tragrahmenstruktur ähnlich der Fig. 3, wobei die Türme der vier Turmdrehkrane von den Unterwagen der Turmdrehkrane demontiert und durch Gebäudeanker an der Fassade des bereits errichteten Gebäudeteils gehalten sind.

Wie die Figuren zeigen, umfasst die Bau- und/oder Materialumschlagsmaschine 1 einen Arbeitskopf 2, der an einer Tragrahmenstruktur 3 verfahrbar bzw. verstellbar aufgehängt ist und in allen drei Dimensionen verfahren werden kann, wie noch erläutert wird.

Der genannte Arbeitskopf 2 kann dabei verschieden ausgebildet sein und/oder mit verschiedenen Arbeitswerkzeugen bestückt werden, beispielsweise in Form eines Materialausbringkopfs wie Betonspritzkopf oder eines anderen Fertigungswerkzeugs und/oder in Form eines Werkstückgreifers und/oder eines anderen Handling-Werkzeugs wie beispielsweise Zweischalengreifer, um beispielsweise verschiedene Materialien wie Sand, Kies oder Ziegelsteine zu handeln. Umfasst der Arbeitskopf 2 einen Materialausbringkopf, kann die Maschine wie ein 3D-Drucker arbeiten, wobei über den Materialausbringkopf grundsätzlich verschiedene Materialien bzw. Baumaterialien ausgebracht werden können, beispielsweise Beton, aber auch alternative Baustoffe wie Lehm- und/oder Kalkmischungen und/oder Kunststoffe wie beispielsweise Kunstschäume.

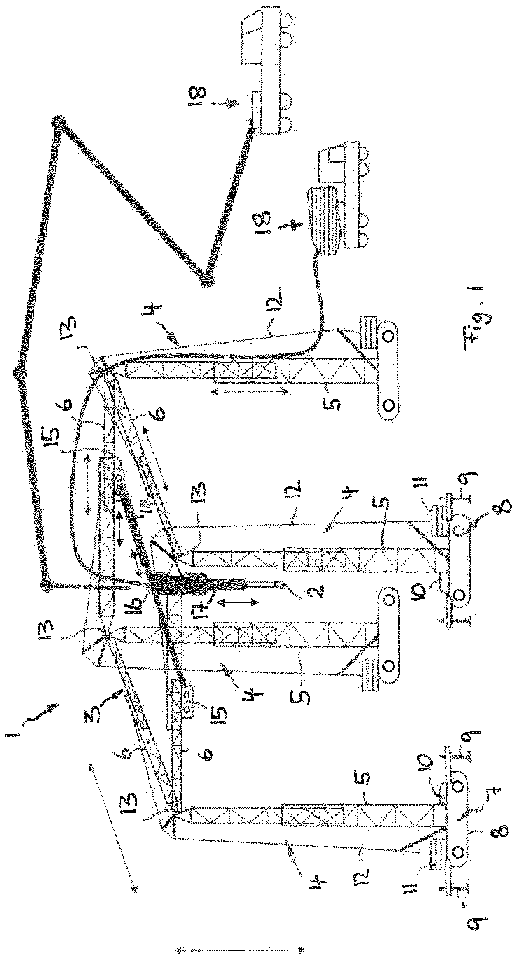

Wie Figur 1 zeigt, wird die genannte Tragrahmenstruktur 3 von mehreren Turmdrehkranen 4 gebildet, die jeweils einen Turm 5 und einen vom Turm 5 getragenen Ausleger 6 umfassen, sowie aneinander befestigt sind.

Insbesondere können die Ausleger 6 der Turmdrehkrane 4 nach Art eines Polygonzugs einen geschlossenen, verständlicherweise nicht kreisrunden, sondern polygonförmigen Ring bilden. Jeder Turmdrehkran 4 kann mit seinem Ausleger 6 zum jeweils nächsten Turmdrehkran weisen, sodass sich die Ausleger 6 reihum von Turmdrehkran zu Turmdrehkran erstrecken.

Jeder Turmdrehkran 4 kann an sich ein eigenständig und vollständig funktionsfähiger Turmdrehkran sein, wobei beispielsweise der Ausleger 6 um eine aufrechte Drehwerksachse verdreht werden kann. Je nachdem, ob der Turmdrehkran 4 ein Untendreher oder ein Obendreher ist, kann der Ausleger 6 relativ zu dem Turm 5 oder zusammen mit dem Turm 5 um die aufrechte Drehwerksachse verdreht werden, wobei hierfür ein geeigneter Drehwerksantrieb vorgesehen sein kann.

Insbesondere kann jeder der Turmdrehkrane 4 als Mobilkran ausgebildet sein, der selbstfahrend ausgebildet sein kann, um von Baustelle zu Baustelle verbracht zu werden, gegebenenfalls aber auch nur auf einer Baustelle selbst verfahren werden kann.

Insbesondere kann ein solcher Mobilkran einen Unterwagen 7 umfassen, der mit einem Fahrwerk 8 beispielsweise in Form eines Raupenfahrwerks oder auch eines Räderfahrwerks am Boden abgestützt und verfahren werden kann. Ein entsprechender Fahrantrieb treibt zumindest eine Fahrwerksachse oder die Raupenketten an.

Wie Figur 1 zeigt, kann der genannte Unterwagen 7 durch Bodenstützen 9 in der Arbeitsposition am Boden abgestützt sein, um die Kippstabilität zu erhöhen. Gegebenenfalls kann zusätzlich oder alternativ auch eine Abspannung des Turms 5 und/oder des Auslegers 6 am Boden vorgesehen sein.

Auf dem genannten Unterwagen 7 kann eine Drehbühne 10 angeordnet und relativ zum Unterwagen 7 um eine aufrechte Drehwerksachse verdreht werden. Wie Figur 1 zeigt, kann auf der genannten Drehbühne 10 ein Ballast 11 zum Austarieren des Auslegers 6 und/oder von am Turmdrehkran 4 zerrenden Lasten vorgesehen sein.

Vorteilhafterweise kann der jeweilige Ausleger 6 über eine Abspannung 12 am Ballast 11 bzw. der Drehbühne 10 abgespannt sein.

Um den Turmdrehkran 4 in einfacher Weise von Baustelle zu Baustelle verfahren zu können, kann vorteilhafterweise der jeweilige Turm 5 längenveränderbar, insbesondere teleskopierbar ausgebildet sein, wobei ein Längenverstellantrieb beispielsweise einen oder mehrere im Turm aufgenommene Hydraulikzylinder oder einen Seilantrieb umfassen kann.

Vorteilhafterweise kann der Ausleger 6 relativ zum Turm 5 auf- und abwippbar sein, insbesondere auch an den Turm 5 anklappbar sein, um eine kompakte Transportkonfiguration zu erzielen, wobei hier ein entsprechender Wippantrieb zum Vennrippen des Auslegers 6 relativ zum Turm 5 vorgesehen sein kann, welcher Wippantrieb beispielsweise eine Verstellung der Abspannung 12 umfassen kann.

Vorteilhafterweise kann auch der Ausleger 6 längenverstellt, insbesondere teleskopiert werden, wobei hier ein entsprechender Verstellantrieb beispielsweise umfassend einen oder mehrere Hydraulikzylinder oder einen Seilantrieb vorgesehen sein kann.

Der Turm 5 kann zusammen mit dem Ausleger 6 aus der aufrechten Arbeitsstellung in eine liegende Transportstellung verschwenkt bzw. niedergewippt werden und ist hierzu um eine liegende Turmschwenkachse schwenkbar an der genannten Drehbühne 5 angelenkt. Ein Turm-Wippantrieb kann beispielsweise einen Hydraulikzylinder zwischen der Drehbühne 10 und dem Turm 5 umfassen.

Wie Figur 1 zeigt, werden die Turmdrehkrane 4 mit ihren Auslegern 6 aneinander befestigt, wobei jeder Ausleger 6 mit seinem auskragenden Endabschnitt am Turm 5 des jeweils nächsten Turmdrehkrans 4 befestigt werden kann. Die Befestigung kann am Turm 5 selbst oder einem benachbarten Abschnitt des Auslegers 6 oder eines gegebenenfalls vorhandenen Gegenauslegers oder einer gegebenenfalls vorhandenen Turmspitze erfolgen.

Zur Befestigung der Ausleger 6 am jeweils benachbarten Turm des nächsten Krans ist vorteilhafterweise eine Schnellkupplung 13 vorgesehen, die den auskragenden Endabschnitt des Auslegers 6 am benachbarten Turmdrehkran 4 formschlüssig und/oder kraftschlüssig verriegeln kann. Eine solche Schnellkupplung 13 kann ein- und ausfahrbare oder verschwenkbare Riegelelemente umfassen, wie eingangs schon näher erläutert.

Vorteilhafterweise kann die genannte Schnellkupplung 13 zwischen einem starr verriegelnden, keine Relativbewegungen zulassenden Verriegelungszustand einerseits und einem dämpfenden und/oder nachgebenden Haltezustand andererseits umgeschaltet werden. Beispielsweise kann die jeweilige Schnellkupplung 13 zwei aneinander fahrbare Kupplungshälften umfassen, von denen zumindest eine beispielsweise über Federelemente oder andere nachgiebige und/oder bewegliche Elemente am zugehörigen Anschlussteil befestigt ist, nämlich an dem auskragenden Endabschnitt des Auslegers und/oder dem Gegenstück des benachbarten Krans, insbesondere dessen Turm 5. In dem genannten dämpfenden und/oder nachgiebigen Kuppplungsmodus ist zwar der jeweilige Ausleger 6 immer noch am Turm bzw. dem benachbarten Strukturabschnitt des nächsten Krans angelenkt, kann sich jedoch begrenzt bewegen. In diesem beweglichen Modus kann die gesamte Tragrahmenstruktur, das heißt die Turmdrehkrane 4 zusammen verfahren werden, wobei gewisse Ausgleichsbewegungen ermöglicht werden, beispielsweise wenn die Tragrahmenstruktur umfassend die Turmdrehkrane von einem Gebäudeabschnitt zu einem benachbarten Gebäudeabschnitt verfahren wird.

Um die Nachgiebigkeit der Schnellkupplung 13 zu sperren, um im Arbeitsmodus des Arbeitskopfs 2 höchste Positioniergenauigkeit zu erzielen, können die nachgiebigen Elemente, beispielsweise die genannten Federn blockiert werden, beispielsweise durch Ausfahren eines Riegels.

Die genannten Schnellkupplungen 13 können im starr verriegelten Verriegelungszustand insbesondere statisch tragend ausgebildet sein, um eine Durchbiegung der miteinander verbundenen Ausleger zu minimieren. Besitzen die miteinander zu verbindenden Ausleger in an sich bekannter Weise sich in Längsrichtung erstreckende Ober- und Untergurte, kann die genannte Schnellkupplung 13 sowohl den/die Ober- als auch den/die Untergurte zweier zu verbindender Ausleger 6 aneinander verriegeln. Der Obergurt des einen Auslegers 6 kann mit dem Obergurt des anderen Auslegers 6 verriegelt werden, und die Untergurte des einen Auslegers 6 können mit den Untergurten des anderen Auslegers 6 verriegelt werden, sodass eine insgesamt stabile, statisch tragende Verbindung zwischen den Auslegern 6 vorgesehen ist.

Alternativ oder zusätzlich können die genannten Schnellkupplungen 13 auch zusätzliche Versteifungselemente umfassen, die nach Art einer Versteifungshülse einen Abschnitt des einen Auslegers 6 mit einem Abschnitt des anderen Auslegers 6 verbindet und versteift, insbesondere darübergeschoben werden kann. Beispielsweise können solche Versteifungselemente nach Art einer Schiene oder einer Hülse oder einer Bandage beispielsweise den Obergurt des einen Auslegers 6 mit dem Obergurt des anderen Auslegers 6 verbinden und versteifen. Analog kann ein Versteifungselement für einen oder jeden der Untergurte vorgesehen sein.

Um die Ausleger 6 anzukuppeln bzw. die Schnellkupplung 13 in Eingriff zu bringen, ist es vorteilhaft, dass die Ausleger 6 längenveränderbar, insbesondere teleskopierbar sind, da hierdurch die auskragenden Endabschnitte ausgefahren werden können, um die Kupplungshälften in Eingriff zu bringen. Alternativ oder zusätzlich kann auch die Wippbarkeit der Ausleger 6 genutzt werden, um die Schnellkupplungen 13 in Eingriff zu bringen. Alternativ oder zusätzlich könnte auch eine Schwenkbewegung, das heißt ein Verdrehen der Ausleger 10 um die aufrechte Drehwerksachse dazu genutzt werden, um die Schnellkupplungen 13 in Eingriff zu bringen.

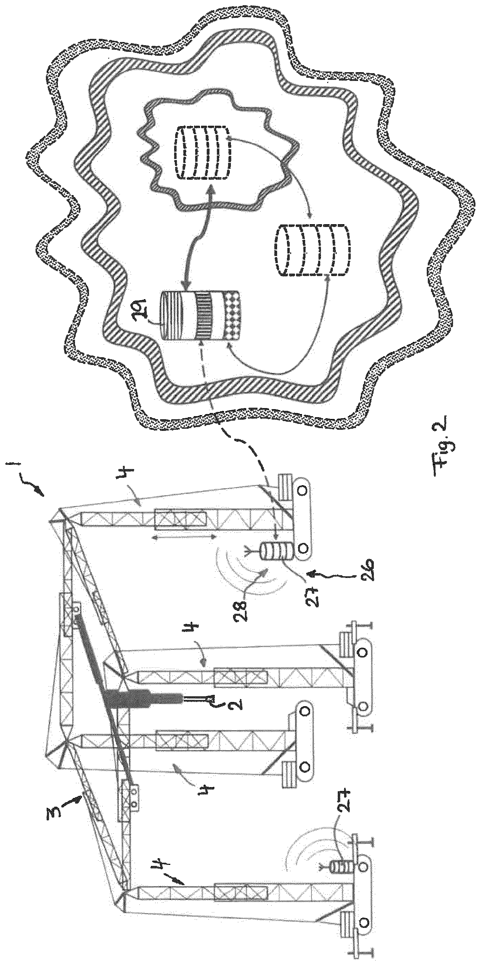

Wie die Figuren 1 und 2 zeigen, kann der Arbeitskopf 2 an einem liegenden Querträger 14 aufgehängt sein, der an zwei vorzugsweise parallelen Auslegern 6 verfahrbar gelagert ist. Hierzu kann der genannte Querträger 14 an seinen Enden schlitten- bzw. katzförmige Lagerelemente umfassen, die entlang des jeweiligen Auslegers 6 verfahren werden können.

Insbesondere können aber auch die an den Auslegern 6 verfahrbar angeordneten Laufkatzen 15 zum Aufhängen des genannten Querträgers 14 und Verfahren des Querträgers 14 genutzt werden. Über die genannten Laufkatzen 15 können im normalen Kranbetrieb Hubseile mit daran angeschlagenen bzw. befestigten Lasthaken abgelassen und angehoben werden, wobei gegebenenfalls auch der genannte Lasthaken genutzt werden kann, um den Querträger 14 an der jeweiligen Laufkatze 15 aufzuhängen. Vorteilhafterweise kann der Querträger 14 aber auch starr oder nur sehr begrenzt beweglich an der Laufkatze 15 befestigt sein.

Die Laufkatzen 15 können über einen geeigneten Katzfahrantrieb, beispielsweise einen Seilantrieb entlang des jeweiligen Auslegers 6 längsverfahren werden.

Wie die Figuren zeigen, kann der Querträger 14 längenveränderbar, insbesondere teleskopierbar ausgebildet sein, um Parallelitätsfehler bzw. leichte Schiefstellungen der Ausleger 6 ausgleichen zu können, wenn der Querträger 14 entlang der ihn tragenden Ausleger 6 verfahren wird und verschieden beabstandete Auslegerabschnitte erreicht werden.

An dem genannten Querträger 14 kann der Arbeitskopf 2 querverfahrbar, das heißt in Längsrichtung des Querträgers 14 verfahrbar gelagert sein. Hierzu kann ein Querträgerschlitten 16 durch einen geeigneten Schlittenantrieb an dem Querträger 14 längsverfahren werden.

Ferner ist der Arbeitskopf 2 vorteilhafterweise relativ zum Querträger 14 höhenverstellbar. Beispielsweise kann an dem genannten Querträgerschlitten 16 ein längenveränderbarer und/oder höhenverfahrbarer, sich aufrecht erstreckender Kopfträger 17 vorgesehen sein, der durch einen Höhenverstellantrieb entsprechend höhenverstellt bzw. längenverändert werden kann.

Ist der genannte Arbeitskopf 2 ein Materialausbringkopf, beispielsweise ein Betonspritzkopf, kann dem Arbeitskopf 2 von einer Versorgungsquelle 18 her das auszubringende Material zugeführt werden, beispielsweise von einem Betonmischer her oder von einer Betonpumpe her, vgl. Figur 1.

Alternativ oder zusätzlich zu der beschriebenen Höhenverstellbarkeit des Arbeitskopfs 2 relativ zum Querträger 14 kann eine Höhenverstellung auch durch Verstellen der Turmhöhen erzielt werden, wenn die Türme 5 der Turmdrehkrane 4 in der beschriebenen Weise höhenverstellbar, insbesondere teleskopierbar sind.

Vorteilhafterweise kann eine solche Höhenverstellung der Türme 5 für eine grobe Höheneinstellung genutzt werden, beispielsweise wenn das nächste Stockwerk eines Gebäudes gefertigt werden soll. Eine feine Höheneinstellung der Arbeitsposition des Arbeitskopfs 2 kann dann durch die Verstellung des Arbeitskopfes 2 relativ zum Querträger 14 erfolgen.

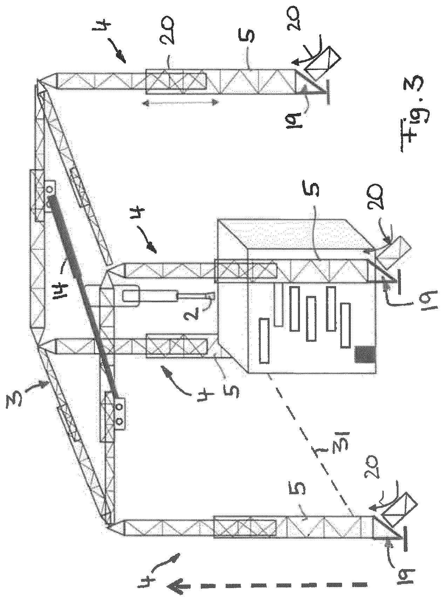

Wie Figur 3 verdeutlicht, kann eine Höhenverstellung der Türme 5 der Turmdrehkrane 4 in größerem Maßstab durch eine Klettereinrichtung 19 bewerkstelligt werden, die das Einklettern zusätzlicher Turmstücke in den Turm 5 ermöglicht bzw. umgekehrt, wenn die Höhe erniedrigt werden soll, das Ausklettern der Turmstücke aus dem Turm 5 ermöglicht. Eine solche Klettereinrichtung 19 kann einen entlang des jeweiligen Turms 5 verfahrbaren Kletterrahmen zum Ein- und/oder Abklettern von Turmstücken aufweisen, wobei eine Führung zum längsverfahrbaren Abstützen des Kletterrahmens gegenüber dem Turm bzw. Abstützen des Turms 5 gegenüber dem Kletterrahmen 20 vorgesehen ist. Der genannte Kletterrahmen 20 kann am Fuß des Turms 5, aber auch an einem höheren Abschnitt des Turms 5 angeordnet sein. Um den bereits vorhandenen Turm 5 zum Einklettern eines neuen Stücks weiter nach oben schieben zu können, kann eine Hubvorrichtung vorgesehen sein, beispielsweise umfassend einen Hydraulikzylinder, um das relativ zum Kletterrahmen verschiebliche Turmstück anheben oder absenken zu können, je nachdem ob ein zusätzliches Turmstück eingeklettert oder abgeklettert werden soll.

Durch das Einklettern zusätzlicher Turmstücke in die Türme 5 der Turmdrehkrane 4 können diese mit dem zu errichtenden Gebäude mitwachsen und nahezu beliebig hohe Gebäude errichtet werden. Dabei bleiben die Turmdrehkrane 4 vorteilhafterweise am Boden abgestützt, wobei gegebenenfalls Querverstrebungen zur Gebäudefassade hin vorgesehen werden können.

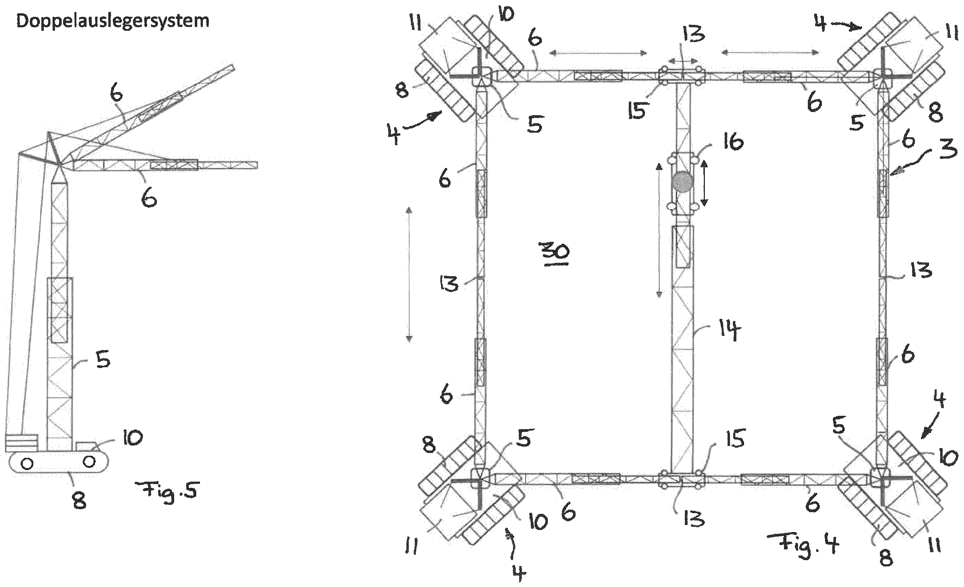

Wie die Figuren 4 und 5 zeigen, können Turmdrehkrane 4 mit Doppelauslegersystemen Verwendung finden, wobei hier die Verbindung zwischen zwei benachbarten Kranen über jeweils zwei "halbe" Ausleger erfolgen kann.

Wie die Figuren 4 und 5 zeigen, kann ein solcher Turmdrehkran mit Doppelauslegersystem zwei Ausleger 6 umfassen, die an einem gemeinsamen Turm 5 angelenkt sind und sich beispielsweise in Längsachse des Turms 5 betrachtet zueinander unter einem Winkel von 90° erstrecken können, wobei dieser Winkel aber auch anders sein kann, je nachdem, wie viele Turmdrehkrane 4 zu einer Tragrahmenstruktur 3 zusammengespannt werden.

Wie Figur 4 zeigt, werden dabei die Ausleger 6 zweier benachbarter Turmdrehkrane 4 aufeinander zu gerichtet, sodass sie sich entlang einer gemeinsamen Gerade erstrecken und mit ihren auskragenden Endabschnitten aneinander angrenzen. Die stirnseitig aneinander angrenzenden Auslegerenden können dann in der beschriebenen Weise durch eine Schnellkupplung 16 aneinander befestigt werden.

Auch bei solchen Turmdrehkranen 4 mit Doppelausleger können die Ausleger 6 längenveränderbar, insbesondere teleskopierbar ausgebildet sein, vgl. Figuren 4 und 5.

Die Figur 4 verdeutlicht dabei nochmals im Detail die Verfahrbarkeit des Arbeitskopfes 2 in der Draufsicht. Einerseits kann der Querträger 14 über die Laufkatzen 15 entlang gegenüberliegender, paralleler Ausleger 6 längsverfahren werden. Andererseits kann der Arbeitskopf 2 querverfahren werden, indem der Querträgerschlitten 16 entlang des Querträgers 14 verfahren wird. Damit lässt sich jede Position über dem Grundriss der zu bebauenden Fläche anfahren. Die Höheneinstellung wird dann in der vorgenannten Weise durch Höhenverstellen des Arbeitskopfes 2 relativ zum Querträger 14 und/oder gegebenenfalls durch Höhenverstellen der Türme 5 bewerkstelligt.

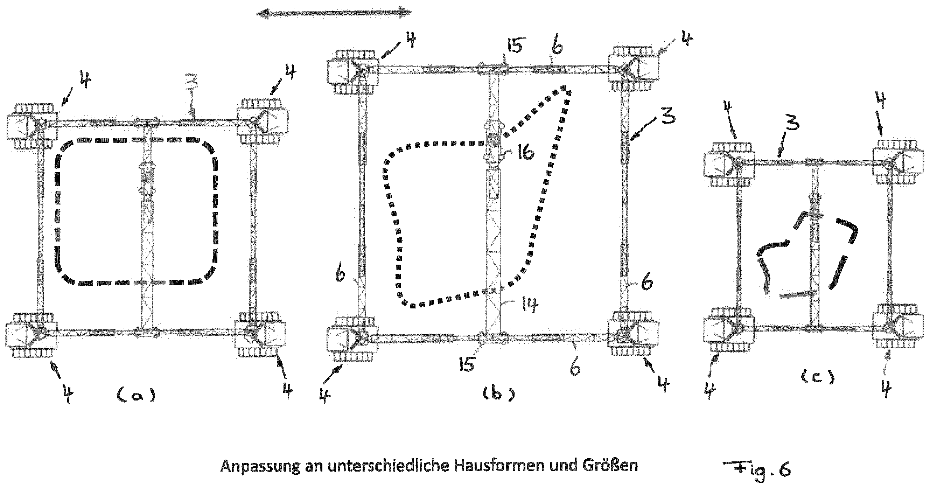

Wie Figur 6 zeigt, ist die Tragrahmenstruktur 3 in einfacher Weise an verschiedene Gebäudegrößen und Grundrissformen adaptierbar, insbesondere wenn die Ausleger 6 längenveränderbar sind. Durch Verlängern bzw. Verkürzen der Ausleger 6 können die Abstände der Türme 5 der Turmdrehkrane 4 voneinander eingestellt werden, um größere oder kleinere Gebäude zu errichten, wobei hier nicht nur wie in den Teilansichten a, b und c der Figur 6 dargestellt quadratische Polygonzüge realisiert werden können, sondern auch eine Adaptierung von quadratisch auf rechteckig und umgekehrt vorgenommen werden können, indem beispielsweise nur zwei der vier Ausleger verkürzt bzw. verlängert werden.

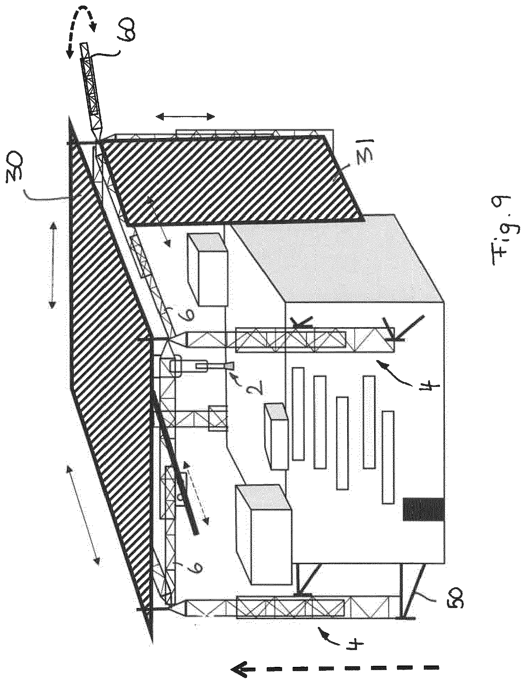

Zum Schutz des Arbeitsbereichs des Arbeitskopfs 2 kann die Tragrahmenstruktur 3 auch ein den Arbeitsbereich überspannendes Dach 30 tragen, vgl. Fig. 4 und Fig. 9, und/oder zumindest eine Seitenwand 31 an den Turmdrehkranen 4 angebracht sein, vgl. Fig. 3 und Fig. 9. Das Dach 30 und die Seitenwand 31 können dabei in der eingangs schon erläuterten Weise ausgebildet und an den Auslegern 6 bzw. den Türmen 5 befestigt sein.

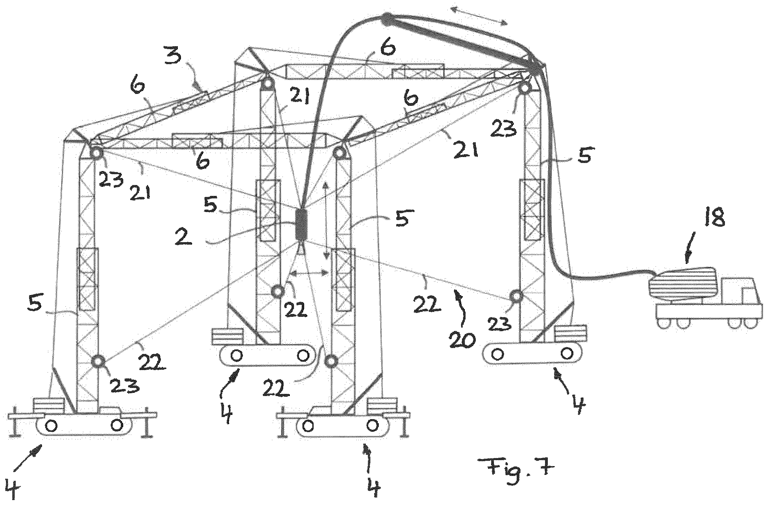

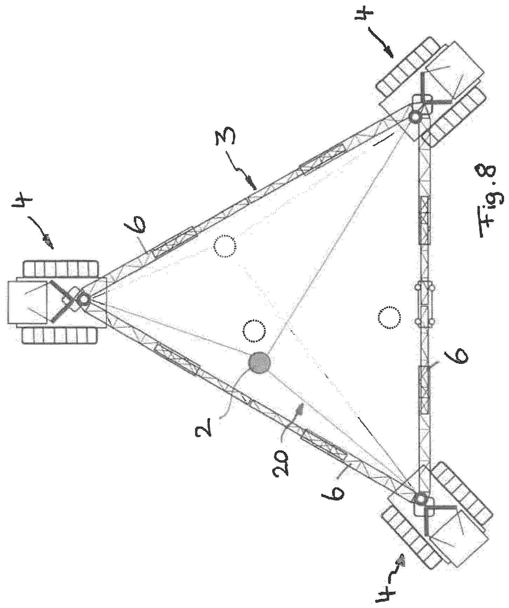

Wie die Figuren 7 und 8 zeigen, kann der Arbeitskopf 2 - oder ein weiterer, zusätzlicher Arbeitskopf - gegebenenfalls auch über eine Verseilung 20 an der Tragrahmenstruktur 3 aufgehängt und relativ hierzu verfahren werden, welche Tragrahmenstruktur 3 auch hier von vier bzw. drei Turmdrehkranen 4 gebildet wird, die über ihre Ausleger 6 aneinander befestigt sind.

Die Verseilung 20 kann dabei, wie Figur 7 zeigt, in vier Himmelsrichtungen bzw. in vier verschiedenen vertikalen Ebenen verlaufende Seile umfassen, wobei vorteilhafterweise jeder Himmelsrichtung bzw. jeder vertikalen Ebene zwei Seile 21, 22 vorgesehen sein können, die von unterschiedlich hoch angeordneten Anlenkpunkten ablaufen können, insbesondere den Arbeitskopf 2 einmal schräg nach oben und einmal schräg nach unten in der jeweiligen Himmelsrichtung bzw. vertikalen Ebene führen können, vgl. Figur 7.

Die genannten Anlenkpunkte der Verseilung 20 können dabei vorteilhafterweise an den Türmen 5 der Turmdrehkrane 4 vorgesehen sein, insbesondere an oberen und unteren Endabschnitten, vgl. Figur 7. Um die Teleskopierbarkeit bzw. Höhenverstellbarkeit der Türme 5 nutzen zu können, ohne die Seilsteuerung adaptieren zu müssen, wäre es aber auch denkbar, die Anlenkpunkte der Verseilung 20 nur an dem austeleskopierbaren Turmstück vorzusehen. Alternativ wäre es auch möglich, zumindest die oberen Anlenkpunkte an den Auslegern 6 vorzusehen.

Wie Figur 8 zeigt, kann eine solche Verseilung 20 auch in einfacher Weise an einer Tragrahmenstruktur 3 angebracht werden, die von nur drei Turmdrehkranen 4 aufgespannt bzw. gebildet wird, wobei die Turmdrehkrane 4 hier in analoger Weise über ihre Ausleger 6 aneinander befestigt sein können, um eine steife, stabile Tragrahmenstruktur 3 zu bilden.

Die genannten Anlenkpunkte können von Umlenkrollen 23 gebildet sein, über die die Steuerseile 21 und 22 zu entsprechenden Seilwinden umgelenkt bzw. geführt werden, mittels derer die Steuerseile 21 und 22 an einem jeden Turmdrehkran 4 unabhängig voneinander, gleichwohl aufeinander abgestimmt verstellt werden können. Wie die Figur 7 zeigt, können die oberen und unteren Anlenkpunkte ausreichend weit voneinander höhenversetzt sein, sodass der Arbeitskopf 2 von den jeweiligen Steuerseilen 21 und 22 sowohl nach oben als auch nach unten fixiert bzw. geführt werden kann. Gleichwohl wäre es gegebenenfalls aber auch möglich, beide Steuerseile von oben her zuzuführen.

Durch die unterschiedlich hohe Anlenkung der Steuerseile 21 und 22, wie in Figur 7 gezeigt, kann der Arbeitskopf 2 in seiner Ausrichtung exakt geführt werden.

Unabhängig von der Aufhängung des Arbeitskopfes 2 über die Verseilung 20 oder über den verfahrbaren Querträger 14 kann zum Verfahren und/oder Positionieren des Arbeitskopfes 2 eine elektronische Steuervorrichtung 26 vorgesehen sein, die die jeweiligen Verfahrantriebe, insbesondere die Katzfahrantriebe und/oder den Verfahrantrieb des Querträgerschlittens 16 und/oder den Höhenverstellantrieb zum Verstellen des Arbeitskopfs 2 relativ zum Querträger 14 und/oder die Seilwinden der Verseilung 20 an jedem Turmdrehkran 4 steuern kann.

Vorteilhafterweise kann dabei an jedem Turmdrehkran 4 eine lokale Steuereinheit 27 vorgesehen sein, die die Verfahrantriebe an dem jeweiligen Turmdrehkran 4 einschließlich der Laufkatzantriebe und den genannten Seilwinden der Verseilung 20 steuern kann. Die lokalen Steuereinheiten 27 können ebenso wie die übergeordnete Steuervorrichtung 26 jeweils elektronisch ausgebildet sein, beispielsweise einen Mikroprozessor und einen Programmspeicher umfassen, um eine oder mehrere Steuerungsroutinen in Form eines Software-Bausteins abzuarbeiten.

Vorteilhafterweise kann die genannte lokale Steuereinheit 27 nicht nur die Verfahrantriebe steuern, sondern auch ein Traglastüberwachungsmodul umfassen, welches das in den jeweiligen Turmdrehkran 4 eingeleitete Kippmoment überwacht und mit einem maximalen Kippmoment abgleicht. Um die Verstellbewegungen an den verschiedenen Turmdrehkranen 4 zu koordinieren, insbesondere das Verfahren der Laufkatzen 15 und/oder das Austeleskopieren der Türme 5 und/oder das Verstellen der Verseilung 20, umfasst die Steuervorrichtung 26 vorteilhafterweise eine übergeordnete oder zentrale Steuereinheit 28, die mit den mehreren lokalen Steuereinheiten 27 kommunizieren kann. Insbesondere können die mehreren lokalen Steuereinheiten 27 Steuerbefehle von der zentralen Steuereinheit 28 für die entsprechenden Verfahrantriebe, insbesondere für das Verstellen der Laufkatzen 25 und das Ein- und Austeleskopieren der Türme ausführen und/oder über eine Sensorik erfasste Verfahrbewegungen an die zentrale Steuereinheit 28 rückmelden, um die Verstellung der Verfahrantriebe so aufeinander abzustimmen, dass der Arbeitskopf 2 in der gewünschten Weise bewegt wird.

Die genannte zentrale Steuereinheit 28 kann dabei auch die weiteren Verfahrantriebe, die nicht speziell einem Turmdrehkran 4 zugeordnet sind, ansteuern, insbesondere das Verfahren des Querträgerschlittens 16 und die Höhenstellbewegungen des Kopfträgers 17.

Die genannte, übergeordnete Steuereinheit 28 kann dabei eine von allen Turmdrehkranen 4 separate Steuervorrichtung beispielsweise in Form eines zentralen Steuerungsservers sein, alternativ aber auch von einer der lokalen Steuereinheiten 27 gebildet sein, welche in diesem Fall sozusagen als Master-Steuereinheit fungiert.

Wie Figur 2 verdeutlicht, kann die Steuereinrichtung 26, insbesondere die übergeordnete Steuereinheit 28 auch an einen zentralen Datenserver 29 angebunden sein, insbesondere an einen sogenannten BIM-Baustein, wobei BIM als Abkürzung für Building Information Model steht und eine Vielzahl relevanter Informationen für das zu errichtende Gebäude enthält, insbesondere CAD-Daten, Logistikpläne, Statusdaten über bereits errichtete Bauwerksteile, zeitliche Planungsdaten etc. Die Anbindung an einen solchen BIM-Server 29 kann beispielsweise über eine Cloud mit gegebenenfalls vorgesehenen Zugangsbeschränkungen bzw. -schranken vorgesehen sein, vgl. Figur 2.

Wie Figur 9 zeigt, können die die Tragstruktur bildenden Turmdrehkrane 4 auch über ihre maximal austeleskopierbare bzw. einkletterbare Höhe hinaus mit einem Gebäude mitwachsen, in dem die Turmdrehkrane 4 mit ihren Türmen durch Gebäudeanker 50 an der Fassade eines bereits errichteten Gebäudeteils verankert wird.

Hat der jeweilige Turmdrehkran 4 seine maximale Höhe beispielsweise durch Austeleskopieren oder durch Einsetzen entsprechender Turmstücke erreicht, kann der Turm 5 des Krans von dessen Drehbühne und/oder dessen Unterwagen demontiert und mittels Gebäudeankern 50 an der bereits errichteten Gebäudefassade verankert werden. Um weiter wachsen zu können, kann zunächst ein Turmteil unterhalb der Klettereinrichtung mit einem oder mehreren Gebäudeankern an der Fassade verankert werden, sodass ein weiteres Turmstück eingeklettert werden kann. Durch Versetzen bzw. Anbringen zusätzlicher Gebäudeanker an einem weiter oben liegenden Gebäudeabschnitt bzw. Turmabschnitt kann der Turm 5 Stück für Stück weiter wachsen, während er an dem Gebäudeteil befestigt ist.

Wie Fig. 9 zeigt, kann dabei auch ein von den Kranen getragenes Dach 30 und/oder ein an einem Ausleger 6 bzw. einem oder mehreren Türmen 5 befestigte Seitenwand 31 mit in die Höhe wachsen.

Ein Montagehilfskran 60 kann dabei hilfreich sein, um neu einzukletternde Turmstücke herbeizuschaffen. Ein solcher Hilfskran 60 kann vorteilhafterweise in Form eines zusätzlichen Auslegers an einem der Krane, der Teil der Tragstruktur 3 ist, ausgebildet sein kann. Ein solcher in die Tragstruktur integrierter Hilfskran 60 oder ein separater Hilfskran kann auch bei der Versorgung der in die Höhe gewachsenen Baustelle mit Baumaterial und/oder Werkzeug und/oder anderen Materialien eingesetzt werden.

## Patentansprüche

1. Verfahren zum Führen und Bewegen eines Arbeitskopfs (2), insbesondere eines 3D-Druckkopfs, **dadurch gekennzeichnet, dass** zumindest drei Turmdrehkrane (4) mit ihren Auslegern (6) aneinander befestigt werden, dass ein den Arbeitskopf (2) tragender Führungsträger (14) an zumindest zwei Laufkatzen (15) zweier Turmdrehkrane (4) befestigt wird, und dass der Arbeitskopf (2) durch Verfahren der Laufkatzen (15) entlang zweier Ausleger (6) zweier Turmdrehkrane (4) in seiner Arbeitsposition eingestellt und verfahren wird.

2. Verfahren zum Führen und Bewegen eines Arbeitskopfs (2), insbesondere eines 3D-Druckkopfs, **dadurch gekennzeichnet, dass** zumindest drei Turmdrehkrane (4) mit ihren Auslegern (6) aneinander befestigt werden, dass eine Verseilung (20) umfassend vestellbare Steuerseile (21) und (22) an den zumindest drei Turmdrehkranen (4) befestigt wird, und dass der Arbeitskopf (2) durch Verstellen der Verseilung (20) relativ zu den drei aneinander befestigten Turmdrehkranen (4) in seiner Arbeitsposition eingestellt und verfahren wird.

3. Bau- und/oder Materialumschlagsmaschine zum Erstellen eines Bauwerks und/oder Manipulieren eines Werkstücks, mit einem Arbeitskopf (2), der verfahrbar an einer Tragrahmenstruktur (3) gelagert ist, **dadurch gekennzeichnet, dass** die Tragrahmenstruktur (3) von zumindest drei Turmdrehkranen (4) gebildet ist, die jeweils einen aufrechten Turm (5) und zumindest einen vom Turm (5) getragenen Ausleger (6) umfassen, der um eine aufrechte Drehwerksachse relativ zum Turm (5) oder zusammen mit dem Turm verdrehbar ist, wobei die Turmdrehkrane (4) mit ihren Auslegern (6) aneinander befestigt sind und einen polygonzugförmigen Tragrahmen bilden.

4. Bau- und/oder Materialumschlagsmaschine nach dem vorhergehenden Anspruch, wobei die Turmdrehkrane (4) jeweils als Mobilkran ausgebildet sind, welcher Mobilkran einen Unterwagen (7) mit einem auf dem Boden verfahrbaren Fahrwerk (8) sowie eine um eine aufrechte Drehwerksachse drehbar auf dem Unterwagen (7) gelagerte Drehbühne (10) umfasst, auf der der Turm (5) des Turmdrehkrans (4) gelagert ist, wobei das Fahrwerk (8) einen Fahrantrieb aufweist und/oder der Turm (5) um eine liegende Turmschwenkachse relativ zur Drehbühne (10) wippbar gelagert ist und/oder der Turm (5) und der Ausleger (6) aneinander anklappbar sind.

5. Bau- und/oder Materialumschlagsmaschine nach einem der vorhergehenden Ansprüche 3-4, wobei die Turmdrehkrane (4) jeweils einen höhenverstellbaren, insbesondere telekopierbaren Turm (5) aufweisen, der von einem Längenverstellantrieb höhenverstellbar, insbesondere telekopierbar ist, und/oder wobei die Ausleger (6) von zumindest zwei Turmdrehkranen (4) längenverstellbar, insbesondere telekopierbar ausgebildet sind.

6. Bau- und/oder Materialumschlagsmaschine nach einem der vorhergehenden Ansprüche 3-5, wobei zum Befestigen der Turmdrehkrane (4) aneinander Schnellkupplungen (13) zum formschlüssigen Verriegeln und/oder kraftschlüssigen Halten der auskragenden Auslegerendabschnitte an einem angrenzenden Abschnitt eines jeweils benachbarten Turmdrehkrans (4) vorgesehen sind, wobei die Schnellkupplungen (13) formpassend in Eingriff bringbare Kupplungshälften umfassen, die durch bewegliche Verriegelungselemente zueinander fixierbar sind, wobei eine Kupplungshälfte der Schnellkupplungen (13) an einem Endabschnitt eines jeden Auslegers (6) und die andere Kupplungshälfte am Turm (5) oder am Ausleger (6) des jeweils benachbarten Turms vorgesehen ist, wobei die Schnellkupplungen (13) zwischen zwei Kupplungsmodi schaltbar ausgebildet sind, wobei in einem ersten Kupplungsmodus der auskragende Auslegerendabschnitt am benachbarten Turmdrehkran (4) starr fixiert ist und in einem zweiten Kupplungsmodus der auskragende Endabschnitt am benachbarten Turmdrehkran (4) elastisch begrenzt beweglich und/oder mit Spiel gehalten ist.

7. Bau- und/oder Materialumschlagsmaschine nach einem der vorhergehenden Ansprüche 3-6, wobei der Arbeitskopf (2) an einem Querträger (14) aufgehängt ist, der an zwei Auslegern (6) zweier Turmdrehkrane (4) längsverfahrbar gelagert ist, wobei der Querträger (14) an den Laufkatzen (15) zweier Turmdrehkrane (4) befestigt ist, welche Laufkatzen (15) entlang der Ausleger (6) der zwei Turmdrehkrane (4) durch Katzantriebe längsverfahrbar sind, wobei der Querträger (14) längenveränderbar, insbesondere teleskopierbar ausgebildet ist.

8. Bau- und/oder Materialumschlagsmaschine (1) nach Anspruch 7, wobei der Arbeitskopf (2) an einem Querträgerschlitten (16) aufgehängt ist, welcher entlang des Querträgers (14) durch einen Schlittenantrieb längsverfahrbar ist, wobei der Arbeitskopf (2) an dem genannten Querträgerschlitten (16) höhenverstellbar aufgehängt ist, wobei der genannte Querträger 14 über zumindest einen der Ausleger (6) hinaus auskragt und für den Querträgerschlitten (16) eine Verfahrbahn bildet, die sich sowohl innerhalb als auch außerhalb des von den Auslegern (6) aufgespannten Polygons erstreckt.

9. Bau- und/oder Materialumschlagsmaschine nach einem der vorhergehenden Ansprüche 3-8, wobei die Turmdrehkrane (4) jeweils eine Klettereinrichtung (19) zum Einklettern und Abklettern von Turmstücken in den Turm (5) des jeweiligen Turmdrehkrans (4) aufweisen.

10. Bau- und/oder Materialumschlagsmaschine nach einem der vorhergehenden Ansprüche 3-6, wobei der Arbeitskopf (2) durch eine Verseilung (20) umfassend zumindest drei Steuerseile (21, 22) an den aneinander befestigten Turmdrehkranen (4) aufgehängt ist, wobei Seilwinden zum Verstellen der genannten Steuerseile (21, 22) relativ zu den Turmdrehkranen (4) und/oder relativ zum Arbeitskopf (2) vorgesehen sind, wobei an jedem Turm (5) der Turmdrehkrane (4) jeweils zwei Anlenkpunkte zum Anlenken zweier Steuerseile (21, 22) vorgesehen und voneinander höhenbeabstandet sind, sodass die beiden Steuerseile (21, 22) an dem jeweiligen Turm (5) in einer gemeinsamen aufrechten Ebene zueinander höhenversetzt zu dem Arbeitskopf (2) verlaufen, wobei die beiden Anlenkpunkte an oberen und unteren Endabschnitten der Türme (5) angeordnet sind, sodass ein Steuerseil (21) den Arbeitskopf (2) nach oben zieht und das andere Steuerseil (22) den Arbeitskopf (2) nach unten zieht, wobei die Steuerseile (21, 22) an den Türmen (5) an den dortigen Anlenkpunkten durch Seilrollen (23) umgelenkt und zu den Seilwinden geführt sind, welche Seilwinden im Bereich des Turmfußes und/oder auf der Drehbühne des jeweiligen Turmdrehkrans (4) angeordnet sind.

11. Bau- und/oder Materialumschlagsmaschine nach einem der vorhergehenden Ansprüche 3-10, wobei
- der Turm (5) und Ausleger (6) eines jeden Turmdrehkrans (4) ausschließlich an dessen Drehbühne (10) gehalten sind und/oder frei von Bodenabspannungen, die im Boden verankert sind, ausgebildet sind,
oder
- der Turm (5) vom Unterwagen (7) und/oder von der Drehbühne (10) eines jeweiligen Turmdrehkrans (4) abmontierbar ist, wobei Gebäudeanker (50) zum Befestigen und Halten des Turms (5) bei demontierter Drehbühne und/oder demontiertem Unterwagen am bereits errichteten Gebäudeteil vorgesehen sind.

12. Bau- und/oder Materialumschlagsmaschine nach einem der vorhergehenden Ansprüche 3-11, wobei an den Auslegern (6) der Turmdrehkrane (4), die den polygonzugförmigen Tragrahmen bilden, ein Dach (30), das den Arbeitsbereich des Arbeitskopfes (2) überspannt, befestigt ist, wobei das genannte Dach (30) vorzugsweise an Obergurten der Ausleger (6) befestigt ist, wobei das Dach (30) zwischen einer ausgefahrenen Stellung und einer eingefahrenen Stellung verstellbar ausgebildet ist, vorzugsweise durch einen Dachantrieb einholbar und ausfahrbar ist, wobei das Dach (30) nach Art einer Sonnenmarkise einrollbar ausgebildet ist und eine Aufwickelwalze umfasst, die an zumindest einem Ausleger (6) eines Turmdrehkrans (4) drehbar gelagert ist, und/oder als Faltdach ausgebildet ist, welches an zwei gegenüberliegenden Auslegern der Turmdrehkrane (4) Schiebeführungen zum Aufschieben des Faltdachs aufweist.

13. Bau- und/oder Materialumschlagsmaschine nach einem der vorhergehenden Ansprüche 3-12, wobei an zumindest zwei Türmen (5) zweier benachbarter Turmdrehkrane (4) eine Seitenwand (31) befestigt ist, wobei die Seitenwand (31) nach Art einer Markise einrollbar ausgebildet ist und eine Wickelwalze aufweist, die an einem die beiden Türme (5) verbindenden Ausleger (6) oder an einem der beiden Türme (5) drehbar gelagert ist, und/oder die Seitenwand (31) als Faltwand ausgebildet ist, die an dem die beiden Türme (5) verbindenden Ausleger (6) eine Schiebeführung oder an den beiden Türmen (5) zwei Schiebeführungen zum Verschieben der Faltwand aufweist.

14. Bau- und/oder Materialumschlagsmaschine nach einem der vorhergehenden Ansprüche 3-13, wobei eine elektronische Steuervorrichtung (26) zum Ansteuern von Verfahrantrieben, insbesondere Katzfahrantrieben und/oder eines Querschlittenantriebs und/oder eines Höhenverstellantriebs und/oder Seilwindenantrieben, zum Verfahren des Arbeitskopfes (2) relativ zur Tragrahmenstruktur (3) vorgesehen ist, wobei die Steuervorrichtung (26) eine zentrale Steuereinheit (28) umfasst, die mit lokalen Steuereinheiten (27) kommuniziert, die an den Turmdrehkranen (4) vorgesehen und zum Ansteuern der an den Turmdrehkranen (4) vorgesehenen Verfahrantriebe ausgebildet sind, wobei die zentrale Steuereinheit (28) den lokalen Steuereinheiten (27) Sollwerte für die Verfahrantriebsverstellung vorgibt.

15. Bau- und/oder Materialumschlagsmaschine nach einem der vorhergehenden Ansprüche 3-14, wobei die elektronische Steuervorrichtung (26) eine Kommunikationsschnittstelle zur Anbindung an einen BIM-Server, in dem Planungs- und/oder CAD- und/oder Statusdaten zu dem zu errichtenden Bauwerk gespeichert sind, aufweist und dazu ausgebildet ist, in Abhängigkeit von vom BIM-Server empfangenen Planungs- und/oder CAD- und/oder Statusdaten Steuerbefehle zum Ansteuern der Verfahrantriebe zum Verstellen des Arbeitskopfes (2) zu generieren und/oder anzupassen, und/oder wobei die elektronische Steuervorrichtung (26) eine Kommunikationsschnittstelle zum Anbinden an einen zentralen Server zum Bereitstellen und/oder Herunterladen verschiedener Programmpakete aufweist, wobei der genannte zentrale Server Zugriff auf eine interne Maschinendaten-Datenbank besitzt, in denen verschiedene Maschinendatensätze gespeichert sind, wobei die elektronische Steuervorrichtung (26) dazu ausgebildet ist, die lokalen Steuereinheiten (27) mit Hilfe eines empfangenen und/oder heruntergeladenen Programm pakets von dem zentralen Server anzusteuern.

## Claims

1. Method for guiding and moving a working head (2), in particular a 3D print head, **characterized in that** at least three revolving tower cranes (4) are attached to each other with their booms (6), **in that** a guide beam (14) carrying the working head (2) is fastened to at least two trolleys (15) of two revolving tower cranes (4), and **in that** the working head (2) is set and displaced in its working position by moving the trolleys (15) along two booms (6) of two revolving tower cranes (4).

2. Method for guiding and moving a working head (2), in particular a 3D print head, **characterized in that** at least three revolving tower cranes (4) are attached to one another with their booms (6), **in that** a system of cables (20) comprising adjustable control cables (21) and (22) is fastened to the at least three revolving tower cranes (4), and **in that** the working head (2) is set and moved in its working position by adjusting the system of cables (20) relative to the three revolving tower cranes (4) fastened to one another.

3. Construction and/or materials-handling machine for erecting a structure and/or manipulating a workpiece, comprising a working head (2) which is movably mounted on a supporting frame structure (3), **characterized in that** the supporting frame structure (3) is formed by at least three revolving tower cranes (4) which each comprise an upright tower (5) and at least one boom (6) which is supported by the tower (5) and can be rotated about an upright slewing axis relative to the tower (5) or together with the tower, wherein the revolving tower cranes (4) are attached to one another by their booms (6) and form a polygonal support frame.

4. Construction and/or materials-handling machine according to the preceding claim, wherein the revolving tower cranes (4) are each configured as a mobile crane, which mobile crane comprises an undercarriage (7) with a travelling gear (8) which is movable on the ground, and a rotary platform (10) which is mounted on the undercarriage (7) so as to be rotatable about an upright slewing gear axis on which the tower (5) of the revolving tower crane (4) is mounted, wherein the undercarriage (8) comprises a travel drive and/or the tower (5) is mounted to rock relative to the rotary platform (10) about a horizontal tower pivot axis and/or the tower (5) and the boom (6) can be folded against one another.

5. Construction and/or materials-handling machine according to one of claims 3 - 4, wherein the revolving tower cranes (4) each comprise a height-adjustable, in particular telescopic tower (5) which is height-adjustable, in particular telescopic, by a length adjustment drive, and/or wherein the booms (6) of at least two revolving tower cranes (4) are configured to be adjustable in length, in particular telescopic.

6. Construction and/or materials-handling machine according to one of claims 3 - 5, wherein, for fastening the revolving tower cranes (4) to one another, quick couplings (13) are provided for positively locking and/or frictionally holding the cantilevered boom end sections to an adjacent section of a respective adjacent revolving tower crane (4), wherein the quick couplings (13) comprise form-fittingly engageable coupling halves which are fixable to each other by movable latching elements, wherein one coupling half of the quick couplings (13) is provided at an end portion of each boom (6) and the other coupling half is provided at the tower (5) or at the boom (6) of the respective adjacent tower, wherein the quick couplings (13) are configured to be switchable between two coupling modes, wherein in a first coupling mode the cantilevered boom end section is rigidly fixed to the adjacent revolving tower crane (4) and in a second coupling mode the cantilevered end section is held on the adjacent revolving tower crane (4) with limited elastic movement and/or with play.

7. Construction and/or materials-handling machine according to one of the preceding claims 3-6, wherein the working head (2) is suspended on a cross member (14) which is mounted on two booms (6) of two revolving tower cranes (4) so as to be longitudinally movable, wherein the cross member (14) is attached to the trolleys (15) of two revolving tower cranes (4), which trolleys (15) are longitudinally movable along the booms (6) of the two revolving tower cranes (4) by trolley drives, wherein the cross member (14) is configured to be variable in length, in particular telescopic.

8. Construction and/or materials-handling machine (1) according to claim 7, wherein the working head (2) is suspended on a cross beam carriage (16) which is longitudinally movable along the cross beam (14) by a carriage drive, wherein the working head (2) is suspended from said cross beam carriage (16) in a height-adjustable manner, wherein the cross member 14 cantilevers beyond at least one of the booms (6) and forms a trajectory for the cross member carriage (16) extending both inside and outside the polygon spanned by the booms (6).

9. Construction and/or materials-handling machine according to one of the preceding claims 3-8, wherein the revolving tower cranes (4) each comprise a climbing device (19) for climbing tower pieces into and out of the tower (5) of the respective revolving tower crane (4).

10. Construction and/or materials-handling machine according to one of the preceding claims 3-6, wherein the working head (2) is suspended by a system of cables (20) comprising at least three control cables (21, 22) from the revolving tower cranes (4) attached to each other, wherein cable winches are provided for adjusting said control cables (21, 22) relative to the revolving tower cranes (4) and/or relative to the working head (2), wherein on each tower (5) of the revolving tower cranes (4) in each case two articulation points for the articulation of two control cables (21, 22) are provided and are spaced apart in height from one another, so that the two control cables (21, 22) on the respective tower (5) extend in a common upright plane offset in height relative to one another with respect to the working head (2), wherein the two articulation points are arranged at upper and lower end portions of the towers (5) so that one control cable (21) pulls the working head (2) upwards and the other control cable (22) pulls the working head (2) downwards, wherein the control cables (21, 22) on the towers (5) are deflected at the articulation points there by cable pulleys (23) and are guided to the cable winches, which cable winches are arranged in the region of the tower base and/or on the rotary platform of the respective revolving tower crane (4).

11. Construction and/or materials-handling machine according to one of the preceding claims 3 - 10, wherein
- the tower (5) and boom (6) of each revolving tower crane (4) are supported exclusively on its rotating platform (10) and/or are formed free of ground bracing anchored in the ground, or
- the tower (5) can be dismantled from the undercarriage (7) and/or from the rotating platform (10) of a respective revolving tower crane (4), wherein building anchors (50) are provided for fastening and holding the tower (5) with dismantled rotating platform and/or dismantled undercarriage to the already erected building part.

12. Construction and/or materials-handling machine according to one of the preceding claims 3 - 11, wherein a roof (30) spanning the working area of the working head (2) is attached to the booms (6) of the revolving tower cranes (4) forming the polygonal tensile support frame, wherein the roof (30) preferably is attached to the upper load-bearing straps of the boom (6), wherein the roof (30) is configured to be adjustable between an extended position and a retracted position, preferably to be retractable and extendable by a roof drive, wherein the roof (30) is configured to be rollable in the manner of a sun awning and comprises a winding roller which is rotatably mounted on at least one boom (6) of a revolving tower crane (4), and/or is configured as a folding roof which has sliding guides on two opposite booms of the revolving tower cranes (4) for sliding on the folding roof.

13. Construction and/or materials-handling machine according to one of the preceding claims 3 - 12, wherein a side wall (31) is attached to at least two towers (5) of two adjacent revolving tower cranes (4), wherein the side wall (31) is configured to be retractable in the manner of an awning and comprises a winding roller which is rotatably mounted on a boom (6) connecting the two towers (5) or on one of the two towers (5), and/or the side wall (31) is configured as a folding wall which comprises a sliding guide on the boom (6) connecting the two towers (5) or two sliding guides on the two towers (5) for displacing the folding wall.

14. Construction and/or materials-handling machine according to one of the preceding claims 3 - 13, wherein an electronic control device (26) is provided for controlling travel drives, in particular trolley travel drives and/or a cross slide drive and/or a height adjustment drive and/or cable winch drives, for displacing the working head (2) relative to the support frame structure (3), wherein the control device (26) comprises a central control unit (28) which communicates with local control units (27) which are provided on the revolving tower cranes (4) and are configured to control the travel drives provided on the revolving tower cranes (4), wherein the central control unit (28) specifies setpoint values for the travel drive adjustment to the local control units (27).

15. Construction and/or materials-handling machine according to one of the preceding claims 3 - 14, wherein the electronic control device (26) has a communication interface for connection to a BIM server, in which planning and/or CAD and/or status data relating to the structure to be constructed are stored, and is configured to generate and/or adapt control commands for actuating the travel drives for adjusting the working head (2) as a function of planning and/or CAD and/or status data received from the BIM server, wherein the electronic control device (26) comprises a communication interface for connecting to a central server for providing and/or downloading various program packages, wherein the central server has access to an internal machine data database in which various machine data sets are stored, wherein the electronic control device (26) is adapted to control the local control units (27) by means of a received and/or downloaded program package from the central server.

## Revendications

1. Procédé pour guider et déplacer une tête de travail (2), en particulier une tête d'impression 3D, **caractérisé en ce qu'**au moins trois grues à tour (4) sont fixées les unes sur les autres par leurs flèches (6), qu'un support de guidage (14) supportant la tête de travail (2) est fixé sur au moins deux chariots (15) de deux grues à tour (4), et que la tête de travail (2) est réglée et déplacée dans sa position de travail en déplaçant les chariots (15) le long de deux flèches (6) de deux grues à tour (4).

2. Procédé pour guider et déplacer une tête de travail (2), en particulier une tête d'impression 3D, **caractérisé en ce qu'**au moins trois grues à tour (4) sont fixées les unes sur les autres par leurs flèches (6), qu'un câblage (20) comprenant des câbles de commande (21) et (22) ajustables est fixé sur les au moins trois grues à tour (4), et que la tête de travail (2) est réglée et déplacée dans sa position de travail en ajustant le câblage (20) par rapport aux trois grues à tour (4) fixées les unes sur les autres.

3. Machine de construction et/ou de manutention de matériau pour ériger un ouvrage de construction et/ou pour manipuler une pièce, avec une tête de travail (2), qui est montée de manière à pouvoir être déplacée sur une structure de châssis porteur (3), **caractérisée en ce que** la structure de châssis porteur (3) est formée par au moins trois grues à tour (4) qui comprennent respectivement une tour verticale (5) et au moins une flèche (6) portée par la tour (5), qui peut tourner autour d'un axe de mécanisme de rotation vertical par rapport à la tour (5) ou conjointement avec la tour, dans laquelle les grues à tour (4) sont fixées les unes sur les autres par leurs flèches (6) et formant un châssis porteur présentant un tracé polygonal.

4. Machine de construction et/ou de manutention de matériau selon la revendication précédente, dans laquelle les grues à tour (4) sont réalisées respectivement en tant que grue mobile, laquelle grue mobile comprend un chariot inférieur (7) avec un mécanisme de déplacement (8) pouvant être déplacé sur le sol ainsi qu'une plateforme rotative (10) montée sur le chariot inférieur (7) de manière à pouvoir tourner autour d'un axe de mécanisme de rotation vertical, sur laquelle la tour (5) de la grue à tour (4) est montée, dans laquelle le mécanisme de déplacement (8) présente un entraînement de déplacement et/ou la tour (5) est montée de manière à pouvoir être basculée par rapport à la plateforme rotative (10) autour d'un axe de pivotement de tour horizontal et/ou la tour (5) et la flèche (6) peuvent être rabattues l'une sur l'autre.

5. Machine de construction et/ou de manutention de matériau selon l'une quelconque des revendications précédentes 3 - 4, dans laquelle les grues à tour (4) présentent respectivement une tour (5) ajustable en hauteur, en particulier télescopique, qui peut être ajustée en hauteur par un entraînement d'ajustement longitudinal, en particulier est télescopique, et/ou dans lequel les flèches (6) sont réalisées de manière ajustable en longueur par au moins deux grues à tour (4), en particulier de manière télescopique.

6. Machine de construction et/ou de manutention de matériau selon l'une quelconque des revendications 3-5, dans laquelle des couplages rapides (13) pour verrouiller par complémentarité de forme et/ou pour maintenir à force les sections d'extrémité de flèche en porte-à-faux sont prévus sur une section adjacente d'une grue à tour (4) respectivement adjacente pour fixer les grues à tour (4) les unes sur les autres, dans laquelle les couplages rapides (13) comprennent des moitiés de couplage pouvant être amenées en prise avec adaptation de forme, qui peuvent être bloquées les unes par rapport aux autres par des éléments de verrouillage mobiles, dans laquelle une moitié de couplage des couplages rapides (13) est prévue sur une section d'extrémité de chaque flèche (6) et l'autre moitié de couplage est prévue sur la tour (5) ou sur la flèche (6) de la tour respectivement adjacente, dans laquelle les couplages rapides (13) sont réalisés de manière à pouvoir être commutés entre deux modes de couplage, dans laquelle la section d'extrémité de flèche en porte-à-faux est bloquée de manière rigide sur la grue à tour (4) adjacente dans un premier mode de couplage et la section d'extrémité en porte-à-faux est maintenue avec une mobilité limitée et/ou avec du jeu élastiquement sur la grue à tour (4) adjacente dans le second mode de couplage.

7. Machine de construction et/ou de manutention de matériau selon l'une quelconque des revendications 3-6, dans laquelle la tête de travail (2) est suspendue sur un support transversal (14), qui est monté de manière à pouvoir être déplacé longitudinalement sur deux flèches (6) de deux grues à tour (4), dans laquelle le support transversal (14) est fixé sur les chariots (15) de deux grues à tour (4), lesquels chariots (15) peuvent être déplacés longitudinalement par des entraînements de chariot le long des flèches (6) des deux grues à tour (4), dans laquelle le support transversal (14) est réalisé de manière à pouvoir être modifié longitudinalement, en particulier de manière télescopique.

8. Machine de construction et/ou de manutention de matériau (1) selon la revendication 7, dans laquelle la tête de travail (2) est suspendue sur un chariot de support transversal, lequel peut être déplacé longitudinalement par un entraînement de chariot le long du support transversal (14), dans laquelle la tête de travail (2) est suspendue de manière ajustable en hauteur sur ledit support de chariot transversal (16), dans laquelle ledit support transversal (14) est en porte-à-faux au-delà au moins d'une des flèches (6) et forme une voie de déplacement pour le chariot de support transversal (16), qui s'étend à la fois à l'intérieur et à l'extérieur du polygone formé par les flèches (6).

9. Machine de construction et/ou de manutention de matériau selon l'une quelconque des revendications 3 - 8, dans laquelle les grues à tour (4) présentent respectivement un système pour grimper (19) pour monter et descendre des pièces de tour dans la tour (5) de la grue à tour (4) respective.

10. Machine de construction et/ou de manutention de matériau selon l'une quelconque des revendications précédentes 3 - 6, dans laquelle la tête de travail (2) est suspendue par un câblage (20) comprenant au moins trois câbles de commande (21, 22) sur les grues à tour (4) fixées les unes sur les autres, dans laquelle des treuils sont prévus pour ajuster lesdits câbles de commande (21, 22) par rapport aux grues à tour (4) et/ou par rapport à la tête de travail (2), dans laquelle respectivement deux points d'articulation pour articuler les deux câbles de commande (21, 22) sont prévus sur chaque tour (5) des grues à tour (4) et sont espacés en hauteur l'un de l'autre si bien que les deux câbles de commande (21, 22) s'étendent sur la tour (5) respective dans un plan vertical commun de manière décalée en hauteur l'un par rapport à l'autre par rapport à la tête de travail (2), dans laquelle les deux points d'articulation sont disposés sur les sections d'extrémité supérieure et inférieure des tours (5) si bien qu'un câble de commande (21) tire vers le haut la tête de travail (2) et l'autre câble de commande (22) tire la tête de travail (2) vers le bas, dans laquelle les câbles de commande (21, 22) sont guidés sur les tours (5) sur les points d'articulation à cet emplacement de manière renvoyée par des galets (23) et par rapport aux treuils, lesquels treuils sont disposés dans la zone du pied de tour et/ou sur la plate-forme rotative de la grue à tour (4) respective.

11. Machine de construction et/ou de manutention de matériau selon l'une quelconque des revendications précédentes, 3 - 10, dans laquelle
- la tour (5) et les flèches (6) de chaque grue à tour (4) sont maintenues exclusivement sur sa plateforme rotative (10) et/ou sont réalisées sans haubannages au sol, qui sont ancrés dans le sol, ou
- la tour (5) peut être démontée du chariot inférieur (7) et/ou de la plateforme rotative (10) d'une grue à tour (4) respective, dans laquelle des ancrages de bâtiment (50) sont prévus pour fixer et maintenir la tour (5) lorsque la plateforme rotative est démontée et/ou que le chariot inférieur est démonté sur la partie de bâtiment déjà érigée.

12. Machine de construction et/ou de manutention de matériau selon l'une quelconque des revendications précédentes 3-11,
dans laquelle un toit (30), qui recouvre la zone de travail de tête de travail (2) est fixé sur les flèches (6) des grues à tour (4), qui forment le châssis porteur présentant un tracé polygonal, dans laquelle ledit toit (30) est fixé de préférence sur des brins supérieurs des flèches (6), dans laquelle le toit (30) est réalisé de manière à pouvoir être ajusté entre une position déployée et une position rentrée, de préférence peut être rétracté et déployé par un entraînement de toit, dans laquelle le toit (30) est réalisé de manière à pouvoir être enroulé à la manière d'un store et comprend un cylindre d'enroulement, qui est monté de manière à pouvoir tourner sur au moins une flèche (6) d'une grue à tour (4), et/ou est réalisé en tant que toit repliable, lequel présente des coulisses de coulissement pour enfiler le toit repliable sur deux flèches opposées des grues à tour (4).

13. Machine de construction et/ou de manutention de matériau selon l'une quelconque des revendications précédentes 3-12,
dans laquelle une paroi latérale (31) est fixée sur au moins deux tours (5) de deux grues à tour (4) adjacentes, dans laquelle la paroi latérale (31) est réalisée de manière à pouvoir être enroulée à la manière d'un store et présente un cylindre d'enroulement, qui est monté de manière à pouvoir tourner sur une flèche (6) reliant les deux tours (5) ou sur une des deux tours (5), et/ou la paroi latérale (31) est réalisée en tant que paroi pliable, qui présente sur la flèche (6) reliant les deux tours (5) une coulisse de glissement ou sur les deux tours (5) deux coulisses de glissement pour faire coulisser la paroi pliable.

14. Machine de construction et/ou de manutention de matériau selon l'une quelconque des revendications précédentes 3-13,
dans laquelle un dispositif de commande (26) électronique est prévu pour piloter des entraînements de déplacement, en particulier des entraînements de déplacement de chariot et/ou un entraînement de chariot transversal et/ou un entraînement d'ajustement en hauteur et/ou des entraînements de treuil pour déplacer la tête de travail (2) par rapport à la structure de châssis porteur, dans laquelle le dispositif de commande (26) comprend une unité de commande centrale (28), qui communique avec des unités de commande locales (27), qui sont prévues sur les grues à tour (4) et sont réalisées pour piloter les entraînements de déplacement prévus sur les grues à tour (4), dans laquelle l'unité de commande centrale (28) spécifie aux unités de commande locales (27) des valeurs de consigne pour l'ajustement d'entraînement de déplacement.

15. Machine de construction et/ou de manutention de matériau selon l'une quelconque des revendications précédentes 3 - 14,
dans laquelle le dispositif de commande électronique (26) présente une interface de communication destinée à être rattachée à un serveur BIM, dans lequel des données de planification et/ou CAD et/ou de statut concernant l'ouvrage de construction à ériger sont stockées et est réalisé pour générer et/ou adapter en fonction des données de planification et/ou CAD et/ou de statut reçues par le serveur BIM, des instructions de commande pour piloter les entraînements de déplacement pour ajuster la tête de travail (2), et/ou dans laquelle le dispositif de commande électronique (26) présente une interface de communication destinée à être rattachée à un serveur central pour fournir et/ou télécharger différents paquets de programmes, dans laquelle ledit serveur central a accès à une base de données interne de données de machine, dans laquelle différents jeux de données de machine sont stockés, dans laquelle le dispositif de commande électronique (26) est réalisé pour piloter les unités de commande locales (27) à l'aide d'un paquet de programmes reçu et/ou téléchargé provenant du serveur central.
